(19) Europäisches Patentamt
European Patent Office
Office européen des brevets

(11) **EP 1 505 786 B1**

(12) **EUROPÄISCHE PATENTSCHRIFT**

(45) Veröffentlichungstag und Bekanntmachung des Hinweises auf die Patenterteilung:
**12.12.2007 Patentblatt 2007/50**

(51) Int Cl.:
***H04L 27/00*** *(2006.01)*

(21) Anmeldenummer: **04015133.4**

(22) Anmeldetag: **28.06.2004**

(54) **Verfahren und Vorrichtung zum Schätzen der Frequenz und/oder der Phase einer digitalen Signalfolge**

Method and device for estimating the frequency and/or the phase of a sequence of digital signals

Procédé et appareil pour estimer la fréquence et/ou la phase d'une séquence de signaux numériques

(84) Benannte Vertragsstaaten:
**DE FR GB**

(30) Priorität: **06.08.2003 DE 10336092**

(43) Veröffentlichungstag der Anmeldung:
**09.02.2005 Patentblatt 2005/06**

(73) Patentinhaber: **Rohde & Schwarz GmbH & Co. KG**
**81671 München (DE)**

(72) Erfinder: **Schmidt, Kurt, Dr.**
**85567 Grafing (DE)**

(74) Vertreter: **Körfer, Thomas et al**
**Mitscherlich & Partner**
**Patent- und Rechtsanwälte**
**Postfach 33 06 09**
**80066 München (DE)**

(56) Entgegenhaltungen:
**WO-A-99/65180          US-A1- 2001 031 022**

**Beschreibung**

Die Erfindung betrifft ein Verfahren und eine Vorrichtung zum Schätzen der Frequenz und/oder der Phase einer digitalen Signalfolge.

Verfahren zum Erfassen der Frequenz und/oder der Phase eines digitalen Signals werden in der digitalen Signalverarbeitung, beispielsweise für die Mobilfunktechnik benötigt. Es besteht daher ein Bedürfnis nach einem universell einsetzbaren robusten Verfahren, das mit geringem numerischen Aufwand auskommt.

Aus der DE 101 38 963 A1 geht ein Verfahren zum Schätzen von Parametern eines CDMA-Signals hervor. Unter anderem wird dort der Frequenzversatz und der Phasenversatz eines digitalen Signals gegenüber einem Referenz- bzw. Synchronisationssignal geschätzt. Dieses Verfahren ist speziell auf die orthogonalen Codekanäle eines CDMA-Signals abgestimmt und daher nicht universell einsetzbar.

Aus der nicht vorveröffentlichten Anmeldung DE 103 09 262 der gleichen Anmelderin ist ein Verfahren und eine Vorrichtung zum Schätzen der Frequenz und/oder der Phase einer digitalen Signalfolge bekannt, das sich jedoch nur bedingt für lange Beobachtungslängen eignet. Die vorliegende Erfindung baut jedoch auf diesem Verfahren auf.

Der Erfindung liegt die Aufgabe zugrunde, ein Verfahren und eine Vorrichtung zum Schätzen der Frequenz und/oder der Phase einer digitalen Eingangs-Signalfolge zu schaffen, welches einen geringen numerischen Aufwand erfordert, auch bei niedrigem Signal-Rausch-Abstand funktioniert, schnell konvergiert, universell einsetzbar ist und insbesondere auch für lange Beobachtungslängen geeignet ist.

Aus dem Dokument "OFDM Burst Frequency Synchronisation by Single Carrier Training Data", U. Lambrette et al., IEEE Communications Letters, Vol. 1, No. 2 (März 1997) ist ein Burst-Frequenz-Synchronisationsverfahren bekannt, welches auf der Verwendung von Einträger-Trainingsdaten und einer OFDM-Nutzdaten-Modulation basiert. Das Nutzdaten-Modulationsformat ist demjenigen ähnlich, welches im DAB-Standard verwendet wird, um vom gegen die Trainingsdaten als einfache CAZAC-Sequenzen gewählt werden. In diesem Dokument erfolgt eine grobe Vorschätzung und eine feine Hauptschätzung eines Frequenzwerts unter Verwendung des groben Vorschätzwertes.

Das Dokument "ML Estimation of Time and Frequency Offset in OFDM Systems" , veröffentlicht in IEEE Transactions on Signal Processing, Vol. 45, No. 7, July 1997, Piscataway, NJ, USA, offenbart einen gemeinsamen Maximum-Likelihood (ML) Symbol/Zeit- und Träger/Frequenz-Offset-Schätzer in OFDM-Systemen. Redundante Informationen, die im Cyclic Prefix enthalten sind, ermöglichen diese Schätzung ohne zusätzliche Piloten.

Die DE 43 19 769 C1 offenbart ein Verfahren zur Einstellung der lokalen Oszillatoren eines Empfängers in einem Mehrkanalübertragungssystem, bei welchem eine Grob- und eine Feinsynchronisation der Oszillatoren mittels im Empfänger bekannter Synchronsymbole erfolgt, wobei ein erstes Synchronsymbol am Anfang eines jeden Rahmens sowie weitere Synchronsymbole innerhalb der nachfolgenden Datensymbole verwendet werden. Ferner weisen die weiteren Synchronsymbole eine geringere spektrale Breite auf als das erste Synchronsymbol und nur für die Feinsynchronisation werden verwendet, wobei die Synchronsymbole zur Feinsynchronisation mit einer höheren spektralen Auflösung ausgewertet werden als zur Grobsynchronisation.

Die WO 99/ 65180 A offenbart, dass ein grober Schätzwert für eine Rahmenstartposition einer Empfangssequenz von gewünschten Abtastwerten in einem Empfangssignal durch die Verwendung des groben Schätzwertes zur Erzeugung von empfangenen Abtastwerten in einer Frequenzbereichsdarstellung verbessert werden kann. Anschließend wird eine Korrelation im Frequenzbereich zwischen den empfangen Abtastwerten im Frequenzbereich und störungsfreien Abtastwerten bestimmt.

Die Aufgabe wird hinsichtlich des Verfahrens durch die Merkmale des Anspruchs 1 und hinsichtlich der Vorrichtung durch die Merkmale des Anspruchs 17 gelöst.

Der Erfindung liegt das Konzept zugrunde, zunächst eine Frequenz-Vorschätzung zur Ermittlung eines Frequenz-Vorschätzwertes für einen Ausschnitt aus der relativ langen digitalen Eingangs-Signalfolge unter Verwendung einer ersten Maximum-Likelihood-Schätzung vorzunehmen, dann eine Frequenz-Kompensation der Eingangs-Signalfolge mit dem Frequenz-Vorschätzwert durchzuführen und anschließend daran eine Frequenz-Hauptschätzung mit einer zweiten Maximum-Likelihood-Schätzung unter Verwendung der frequenzkompensierten Signalfolge vorzunehmen. Der Gesamtschätzwert der Frequenz ergibt sich dann durch Addition des Frequenz-Vorschätzwerts mit dem Frequenz-Hauptschätzwert. Das erfindungsgemäße Konzept eignet sich besonders für sehr lange Eingangs-Signalfolgen, d.h. für lange Beobachtungslängen.

Die Unteransprüche beinhalten vorteilhafte Weiterbildungen der Erfindung.

Anspruch 18 betrifft ein digitales Speichermedium, Anspruch 19 betrifft ein Computerprogramm zur Durchführung des erfindungsgemäßen Verfahrens.

Die Erfindung wird nachfolgend anhand der Zeichnung näher beschrieben. In der Zeichnung zeigen:

Fig. 1      ein Blockschaltbild eines der Erfindung zugrundeliegenden digitalen Übertragungssystems;

Fig. 2      das Übertragungsmodell in äquivalenten Tiefpaßbereich;

Fig. 3    ein systemtheoretisches Modell in zeitdiskreter Basisbanddarstellung;

Fig. 4    eine schematische Darstellung einer Matrix;

Fig. 5    ein Blockschaltbild zur Erläuterung des Verfahrens nach DE 103 09 262;

Fig. 6    ein Blockschaltbild einer vorteilhaften Weiterbildung des Verfahrens nach DE 103 09 262;

Fig. 7    ein Zeitdiagramm zur Verdeutlichung der Mittelung;

Fig. 8    ein Blockschaltbild zur Erläuterung des erfindungsgemäßen Verfahrens und

Fig. 9    ein Blockschaltbild einer vorteilhaften Weiterbildung des erfindungsgemäßen Verfahrens.

Nachfolgend wird zunächst zum besseren Verständnis der Erfindung ein der Erfindung zugrundeliegendes Modell eines digitalen Übertragungssystems erläutert.

Im Rahmen der vorliegenden Anmeldung werden folgende Formelzeichen verwendet:

$\alpha$        Allgemeiner Summationsindex

***a***        Komplexe zu sendende Symbolfolge

$a_\nu$        $\nu$-tes Symbol der Folge ***a***

$a_{\nu,I}$        Imaginärteil des $\nu$-ten Symbols der Folge ***a***

$a_{\nu,R}$        Realteil des $\nu$-ten Symbols der Folge ***a***

arg{·}        Argumentbildung

$\beta$        Allgemeiner Summationsindex

$\delta(t)$        Diracimpuls (Delta-Funktional)

$\delta_{\nu\mu}$        Kronecker-Operator

$\varepsilon$        Normierter Zeitversatz

$E\{\cdot\}$        Erwartungswert

$f(\cdot)$        Allgemeine Funktion

$\Delta f$        Zu schätzender Frequenzversatz zwischen Sender und Empfänger

$\Delta f_{err}$        Verbleibender Schätzfehler am Ausgang der Feinschätzstufe des uML '

$\Delta f_{err,limit}$        Definierte Schranke für den maximal zulässigen Schätzfehler am Ausgang der Feinschätzstufe

$\Delta f_{main}$        Von der Hauptschätzung des long_uML-Schätzers zu schätzender Frequenzversatz der Folge $\chi_{comp}$

$\Delta f_{rest}$        Durch die Feinschätzung des uML-Schätzers zu schätzender Frequenzversatz, der nach erfolgter Kompensation mit dem Grobschätzwert $\Delta f_{coarse}$ verbleibt

$\Delta f_{rest}^{\{it\}}$        Vom Feinschätzalgorithmus in der it-ten Iteration zu schätzende Frequenz

$\Delta f_{rest,conv}$        Maximales $\Delta f_{rest}$, für welches der Feinschätzalgorithmus noch konvergiert

$\Delta f_{rest,max}$        Maximaler Frequenzversatz $\Delta f_{rest}$ am Ausgang der Grobschätzstufe

$\Delta \tilde{f}$        Probierwert für $\Delta f$

$\Delta \hat{f}$        Schätzwert für Frequenzversatz des uML-Schätzers

$\Delta \hat{f}$        Schätzwert für Frequenzversatz des long_uML-Schätzers

$\Delta \hat{f}_{coarse}$        Frequenzschätzwert der Grobschätzung des universellen ML-Schätzers

$\Delta \hat{f}_{fine}$        Frequenzschätzwert der Feinschätzung des universellen ML-Schätzers

$\Delta \hat{f}_{fine}^{\{it\}}$        Bei der it-ten Iteration des Feinschätzalgorithmus ermittelter Schätzwert

$\Delta \hat{f}_{fine\_total}$        Summe aller bis zur aktuellen Iteration des Feinschätzalgorithmus ermittelten Schätzwerte $\Delta \hat{f}_{fine}^{\{it\}}$

$\Delta \hat{f}_{int}$        Schätzwert für $\Delta f_{rest}$ am Ausgang der Grobschätzstufe beim Verfahren zur nachträglichen Erhöhung der Frequenzauflösung des uML-Schätzers

$\Delta \hat{f}_{main}$        Frequenzschätzwert der Hauptschätzung des long_uML-Schätzers

$\Delta \hat{\dot{f}}_{main}^{\{it\}}$        Frequenzschätzwert der *it*-ten Iteration der Hauptschätzung beim long_uML-Schätzer mit iterativer Hauptschätzung

$\Delta\hat{f}_{main\_total}$      Summe aller bis zur aktuellen Iteration ermittelten Schätzwerte $\Delta\hat{f}_{main}^{\{it\}}$

$\Delta\hat{f}_{pre}$      Frequenzschätzwert der Vorschätzung des long_uML-Schätzers

$\Delta\hat{f}_{pre.max}$      Maximaler Frequenzschätzfehler der Vorschätzung (bei $\Delta f = 0$)

$f_{+\frac{1}{2}\cdot Q}$,      Versuchswerte für die Schätzung von $\Delta f_{rest}$ beim

$f_{-\frac{1}{2}\cdot Q}$      Verfahren zur nachträglichen Erhöhung der Frequenzauflösung des uML-Schätzers

$f_Q$      Quantisierung der FFT im Frequenzbereich (Frequenzauflösung)

$f_S$      Symbolrate (=$1/T_S$)

$f_{T\,Sender}$      Trägerfrequenz des Modulators im Sender

$f_{T\,Empfänger}$      Trägerfrequenz des Modulators im Empfänger

$F(\cdot)$      Stammfunktion der allgemeinen Funktion $f(\cdot)$

$F_{nN}$      Verteilungsfunktion der normierten Normalverteilung

$FFT\{\cdot\}$      Fouriertransformation

$\Gamma(\nu\cdot T_a/T_{beob})$      Zeitdiskrete Gewichtsfunktion, die durch Faltung zweier reeller Rechteck-folgen der Länge $N_{Sym}$ mit einer konstanten Amplitude von 1 entsteht

$g$      Zu schätzende Verstärkung

$\tilde{g}$      Probierwert für $g$

$\hat{g}$      Schätzwert für $g$

$h_e(t)$      Impulsantwort des Empfangsfilters

$h_{ges}(t)$      Impulsantwort der Gesamtübertragungsstrecke

$h_S(t)$      Impulsantwort des Sendefilters

$it$      Aktuelle Iterationszahl des Feinschätzalgorithmus des uML-Schätzers bzw. der iterativen Hauptschätzung des long_uML-Schätzers

$IFFT\{\cdot\}$      Inverse Fouriertransformation

$Im\{\cdot\}$      Imaginärteilbildung

$\kappa$      Index für ein bestimmtes Glied der Folge $\chi_{mean}$

$k$      Zählvariable

$K_1, K_2$      Eingeführte Substitutionen für spezielle Zahlenreihen

$L(\cdot)$      Log-Likelihood-Funktion

$\mu$      Index für bestimmte Frequenz innerhalb des diskreten Frequenzspektrums

$\mu_{max}$      Index der diskreten Frequenz, bei der das Maximum von $Y_\mu$ vorliegt

$\max_x\{f(x)\}$      Maximumbildung der Funktion $f(x)$ bezüglich des Parameters $x$

$M_{\alpha,\beta}$      Matrixelement in Zeile $\alpha$, Spalte $\beta$

$n$      Komplexe Rauschfolge (AWGN)

$n_\nu$      $\nu$-tes Symbol der Rauschfolge $\boldsymbol{n}$

$n_{\nu,I}$      Imaginärteil des $\nu$-ten Symbols der Rauschfolge $\boldsymbol{n}$

$n_{\nu,R}$      Realteil des $\nu$-ten Symbols der Rauschfolge $\boldsymbol{n}$

$nof\_it$      Gesamtzahl der vom Feinschätzalgorithmus durchzuführenden Iterationen

$nof\_it1$      Iterationszahl des uML-Algorithmus in der Vorschätzung des long_uML

$nof\_it2$      Iterationszahl des uML-Algorithmus in der Hauptschätzung des long_uML

$nof\_it\_main$      Anzahl der Iterationen beim long_uML mit iterativer Hauptschätzung

N      Menge der natürlichen Zahlen

$\frac{1}{2}$-$N_0$      zweiseitiges Leistungsdichtespektrum des Rauschsignals ,

$N_{FFT}$      FFT-Länge bei der Frequenz-Grobschätzung des universellen ML-Schätzers

$N_{Sym}$      Gesamtschätzlänge des uML-Schätzers

$N'_{Sym}$      Gesamtschätzlänge des long_uML-Schätzers

$N_{Sym1}$      Schätzlänge der Vorschätzung des long_uML-Schätzers

$N_{Sym2}$      Schätzlänge der Hauptschätzung des long_uML-Schätzers

$\nu$      Index für ein bestimmtes Symbol innerhalb der Symbolanzahl $N_{Sym}$

$\Delta\omega$      Zu schätzender Frequenzversatz als Kreisfrequenz

$\Delta\tilde{\omega}$      Probierwert für $\Delta\omega$

$\Delta\hat{\omega}$      Schätzwert für $\Delta\omega$

$\Delta\overline{\omega}$ Zu schätzender Frequenzversatz als Kreisfrequenz, normiert auf $T_a$

$\Delta\widetilde{\boldsymbol{\omega}}$ Probierwert für $\Delta\overline{\omega}$

$\Delta\hat{\boldsymbol{\omega}}$ Schätzwert für

$\varphi_{y_{\nu,comp}}$ Phase des $\nu$-ten Gliedes der Folge $y_{comp}$

$\phi$' Zu schätzender Phasenversatz zwischen Sender und Empfänger

$\tilde{\phi}$ Probierwert für $\phi$

$\hat{\phi}$ Phasenschätzwert des uML-Schätzers

$\hat{\phi}$' Phasenschätzwert des long_uML-Schätzers

$\hat{\phi}_{err,max}$ Maximaler Phasenschätzfehler

$\hat{\phi}_{main}$ Phasenschätzwert der Hauptschätzung des long_uML-Schätzers

$\hat{\phi}_{pre}$ Phasenschätzwert der Vorschätzung des long_uML-Schätzers

$P(\cdot)$ Auftrittswahrscheinlichkeit

$P(a\leq x\leq b)$ Wahrscheinlichkeit, daß der Parameter x zwischen den Grenzen a und b liegt

***r*** Komplexe Empfangsfolge am Ausgang des zeitdiskreten Ersatzkanals

$r_\nu$ $\nu$-tes Symbol der Empfangsfolge ***r***

$Re\{\cdot\}$ Realteilbildung

***s*** Komplexe Sendefolge (Symbolfolge ***a*** moduliert mit $\Delta f$, $\phi$ und $g$)

$s_{ges}$ Nutzanteil der Folge $x_{mean}$ bei nicht konstanten Symbolbeträgen der Folge *a*

$s_{\kappa.ges}$ Glied Nr. $\kappa$ des Nutzanteils $s_{ges}$

$s_{\kappa,mean}$ Glied Nr. $\kappa$ des Nutzanteils $s_{mean}$

$s_{mean}$ Nutzanteil der Folge $x_{mean}$ bei konstanten Symbolbeträgen der Folge *a*

$s_\nu$ $\nu$-tes Symbol der Sendefolge ***s***

$sinc(\chi)$ $sin(\pi\cdot\chi)/(\pi\cdot\chi)$

$\sigma^2_{CR,f}$ Untere Grenze der Varianz von $\Delta f$ ($\lfloor$ Cramer-Rao-Grenze)

$\sigma_{CR,\overline{\omega}}$ Untere Grenze der Standardabweichung von $\Delta\hat{\boldsymbol{\omega}}$ ($\lfloor$ Cramér-Rao-Grenze)

$\sigma^2_{CR,\varpi}$ Untere Grenze der Varianz von $\Delta\hat{\boldsymbol{\omega}}$ ($\lfloor$ Cramér-Rao-Grenze)

$\sigma_{CR,\phi}$ Untere Grenze der Standardabweichung von $\hat{\phi}$ ($\lfloor$ Cramér-Rao-Grenze)

$\sigma^2_{CR,\phi}$ Untere Grenze der Varianz von $\hat{\phi}$ ($\lfloor$ Cramer-Rao-Grenze)

$\sigma_{\overline{\omega}}$ Standardabweichung des Frequenzschätzfehlers

$\sigma_\phi$ Standardabweichung des Phasenschätzfehlers

$\sigma_{\phi,krit}$ Standardabweichung des Phasenschätzfehlers für $SNR_{krit}$

$SNR$ Linearer Signal-Rausch-Abstand

$SNR_{krit}$ Kritischer Signal-Rausch-Abstand, bei dem die Frequenz- bzw. Phasenschätzung des uML-Schätzers gerade noch effizient arbeitet

$T_a$ Abtastzeit

$T_{a2}$ Zeitlicher Abstand der Folgenglieder von $x_{mean}$ beim long_uML-Schätzer

$T_{beob}$ Beobachtungsdauer

$T_S$ Symboldauer

$window(\nu)$ Fensterfunktion zur Beschneidung einer Folge auf eine festgelegte Länge

*x*' Modulationsbereinigte komplexe Empfangsfolge

$x_{comp}$ Mit $\Delta\hat{f}_{pre}$ kompensierte Folge am Ausgang der Vorschätzung des long_uML

$x_{\kappa,mean}$ Folgenglied Nr. $\kappa$ der Folge $x_{mean}$

$\boldsymbol{x^{\{it\}}_{\kappa,mean}}$ Folgenglied Nr. $\kappa$ jener Folge, die beim long_uML mit iterativer Hauptschätzung durch Mittelwertbildung

aus den Folgengliedern $\boldsymbol{x^{\{it\}}_{\nu,comp}}$ entsteht

$x_{mean}$ Folge von Mittelwerten, die bei der Hauptschätzung aus $x_{comp}$ gebildet wird

$x'_\nu$ $\nu$-tes Symbol der modulationsbereinigten Empfangsfolge *x*'

$x_{\nu,comp}$ $\nu$-tes Glied der Folge $x_{comp}$

$x_{\nu,comp}^{(it)}$ $\nu$-tes Glied einer frequenzkompensierten Folge innerhalb der *it*-ten Iteration des long_uML-Schätzers mit iterativer Hauptschätzung

$X_\mu$ $\mu$-tes Folgenglied der Fouriertransformierten der Folge **x**

**y** Komplexe Folgen, entspricht der inversen FFT des betragsquadrierten Spektrums der Folge **x**

$y_\nu$ $\nu$-tes Symbol der Folge **y**

$y_{comp}$ Mit $\Delta\hat{f}_{coarse}$ kompensierte Folge am Ausgang der Grobschätzstufe des uML

$y_{\nu.comp}$ $\nu$-tes Symbol der Folge **y_comp**

$y_{\nu,comp}^{(it)}$ $\nu$-tes Symbol einer frequenzkompensierten Folge innerhalb der *it*-ten Iteration des Feinschätzalgorithmus des universellen ML-Schätzers

$Y_\mu$ $\mu$-tes Folgenglied der Fouriertransformierten der Folge **y**

$z^*$ Konjugiert komplexer Wert der Variable z

Z Komplexer Gesamtzeiger einer Summe

Im Rahmen der vorliegenden Anmeldung werden folgende Abkürzungen verwendet:

AWGN Additive White Gaussian Noise

*const* konstant

CRB Cramér-Rao-Grenze

DA Data Aided

dB Dezibel

FFT Fast Fourier Transformation

ISI Intersymbolinterferenz

long_uML Erfindungsgemäßer universeller Maximum-Likelihood-Schätzer für Frequenz und Phase bei großen Beobachtungslängen

LDS Leistungsdichtespektrum

LLF Log-Likelihood-Funktion

ML Maximum Likelihood

NDA Non Data Aided

QAM Quadratur-Amplituden-Modulation

SNR Signal-Rausch-Abstand (signal to noise ratio)

uML Universeller Maximum-Likelihood-Schätzer für Frequenz und Phase

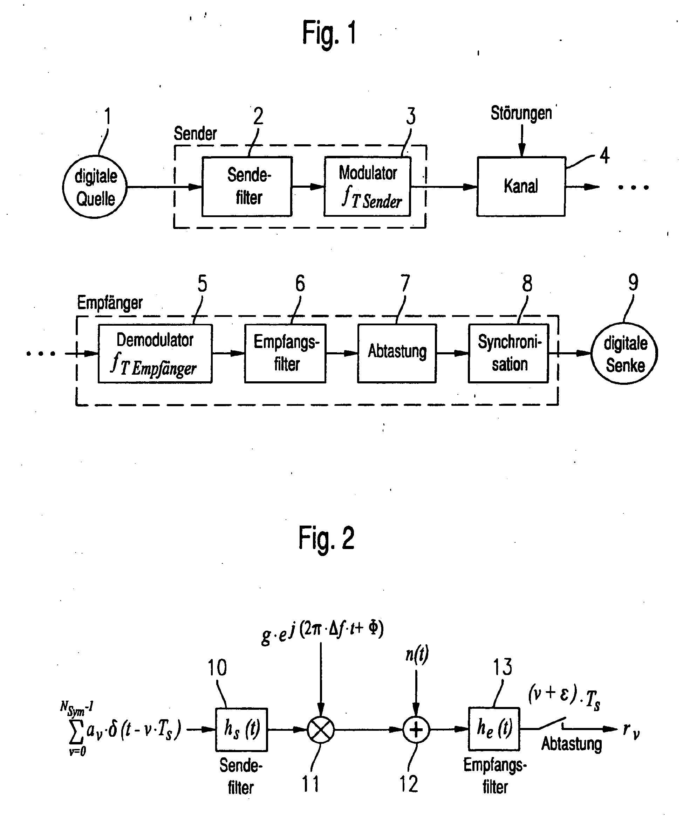

Die Notwendigkeit der Frequenz- und Phasenschätzung zur Trägersynchronisation ergibt sich aus dem Aufbau von digitalen Übertragungssystemen. In Fig. 1 sind die Grundelemente der eines solchen Übertragungssystems dargestellt.

Nachdem durch ein Sendefilter 2 eine Impulsformung des zu übertragenden digitalen Quellensignals der digitalen Quelle 1 durchgeführt wurde, erfolgt in dem Modulator 3 die Modulation des Signals mit der Trägerfrequenz $f_{T\,Sender}$. Bei der Übertragung über den Kanal 4 wird das nun im Bandpaßbereich vorliegende Signal durch die Überlagerung von Störungen verfälscht. Im Rahmen dieser Anmeldung wird von einem sogenannten AWGN-Kanal ausgegangen, d.h. als Störung wird die Addition eines Rauschsignals mit gaußförmig verteilter Amplitude und einem für alle Frequenzen konstantem Leistungsdichtespektrum (LDS) von $\frac{1}{2} \cdot N_0$ angenommen. Das verrauscht beim Empfänger ankommende Signal wird durch den Demodulator 5 mit der Frequenz $f_{T\,Emfänger}$ zurück ins Basisband transformiert. Mit Hilfe des nachfolgenden Empfangsfilters 6 wird anschließend die Störleistung reduziert. Dadurch und durch eine erfolgreiche Abtastung in der Abtasteinheit 7 bzw. Synchronisation in der Synchronisationseinheit 8 wird eine Decodierung des tatsächlich gesendeten Signals in der digitalen Senke 9 ermöglicht.

Im Rahmen der Synchronisation ist neben der Taktsynchronisation eine Frequenz- und Phasenschätzung notwendig, da sich zum einen die Frequenz der lokalen Oszillatoren von Sender und Empfänger geringfügig um

$$\Delta f = f_{T\,Sender} - f_{T\,Empfänger} \tag{1}$$

unterscheidet. Zum anderen besteht auch eine Phasenverschiebung $\phi$ zwischen Sender und Empfänger. Dieser Frequenz- bzw. Phasenversatz muß durch Schätzung ermittelt und beim Empfangssignal kompensiert werden, damit in der digitalen Senke 9 auf die richtigen Symbolpunkte entschieden werden kann.

Ausgehend vom beschriebenen Blockschaltbild nach Fig. 1 läßt sich ein Übertragungsmodell für den äquivalenten Tiefpaßbereich nach Fig. 2 erstellen. Dabei wird die zeitdiskrete Folge komplexer Sendesymbole mit der Symboldauer $T_S$ durch das Sendefilter 10 mit der Impulsantwort $h_S(t)$ zum Sendesignal geformt. Der Frequenz- und Phasenversatz zwischen Sender und Empfänger wird in Form eines Drehzeigers durch den Multiplizierer 11 aufmoduliert, wobei zusätzlich eine Verstärkung g berücksichtigt wird. Nachdem im Kanal weißes Rauschen durch den Addierer 12 additiv überlagert wurde, erfolgt im Empfänger die Filterung durch das Empfangsfilter 13 mit der Impulsantwort $h_e(t)$. Das gefilterte Empfangssignal wird schließlich in Abständen von $T_a$ abgetastet, wobei ein Zeitversatz $\varepsilon \cdot T_S$ gegenüber den idealen Abtastzeitpunkten auftreten kann.

Für eine erfolgreiche Frequenz- und Phasenschätzung sind nun mehrere Voraussetzungen notwendig. Zum einen muß beim Empfänger eine entsprechende Taktsynchronisation vorliegen, d.h. es wird

$$\varepsilon \overset{!}{=} 0 \tag{2}$$

vorausgesetzt.

Zum anderen muß die erste Nyquistbedingung erfüllt sein, so daß eine intersymbolinterferenzfreie (ISI-freie) Abtastung erfolgen kann. Dafür müssen Sende- und Empfangsfilter so beschaffen sein, daß die Impulsantwort

$$h_{ges}(t) = h_s(t) * h_e(t) \tag{3}$$

der Gesamtübertragungsstrecke die Nyquistbedingung erfüllt:

$$h_{ges}(\nu \cdot T_a) = \begin{cases} const & \text{für } \nu = 0 \\ 0 & \text{sonst} \end{cases} \tag{4}$$

Dies ist dann gegeben, wenn als Sendefilter 10 und Empfangsfilter 13 z.B. sogenannte Root-Raised-Cosine-Filter verwendet werden. Darüber hinaus muß der Frequenzversatz $\Delta f$ zwischen Sender und Empfänger so klein sein, daß sich das Sendefilter 10 und das Empfangsfilter 13 im Frequenzbereich noch ausreichend überdecken. Es muß daher folgende Forderung erfüllt sein:

$$|\Delta f| \ll \frac{1}{T_s} \tag{5}$$

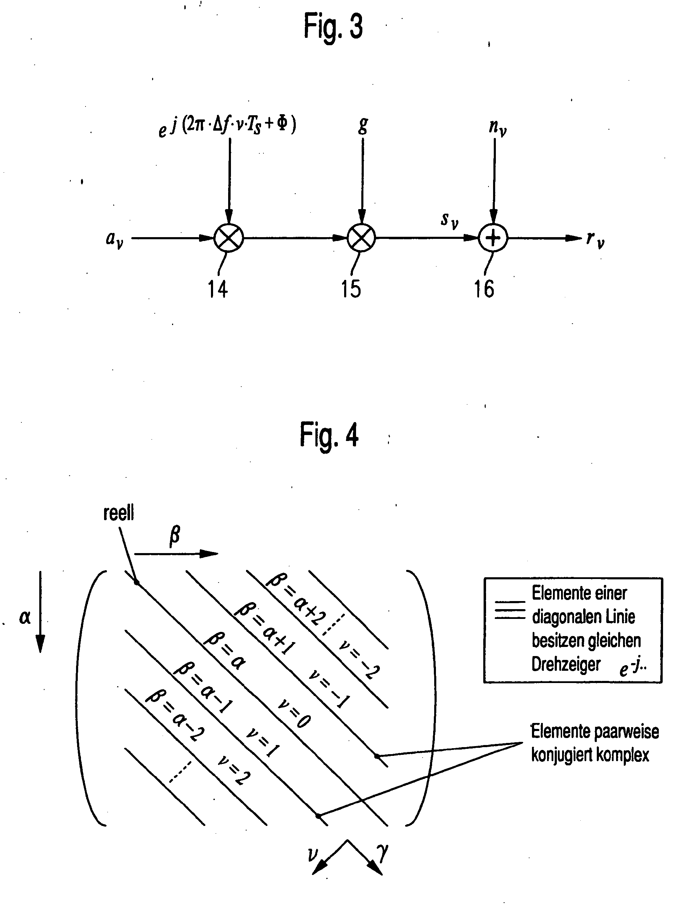

Falls die erste Nyquist-Bedingung erfüllt ist, kann das in Fig. 2 dargestellte Übertragungsmodell zu dem in Fig. 3 dargestellten zeitdiskreten Basisbandmodell vereinfacht werden. Dieses Modell stellt den Ausgangspunkt für die Betrachtungen und Simulationen im Rahmen dieser Anmeldung dar.

Die Symbole $a_v$ der zu sendenden Folge **a** werden dabei zunächst durch den Multiplizierer 14 mit einem Drehzeiger multipliziert, welcher den Frequenz- und Phasenversatz zwischen Sender und Empfänger modelliert. Nach einer Verstärkung mit dem reellen Faktor $g$ durch den Multiplizierer 15 wird die entstandene Sendefolge **s** im zeitdiskreten Ersatzkanal durch die durch den Addierer 16 addierte komplexe Rauschfolge **n** gestört, so daß dadurch schließlich die Symbole $r_v$ der Empfangsfolge **r** entstehen.

Der in dieser Anmeldung vorgestellte Maximum-Likelihood (ML)-Schätzer für Frequenz und Phase bei großen Beobachtungslängen (nachfolgend als long_uML-Schätzer bezeichnet) basiert auf einem universell einsetzbaren Frequenz- und Phasenschätzalgorithmus, der nach dem Maximum-Likelihood-Prinzip arbeitet. Zunächst wird nachfolgend ein universeller Maximum-Likelihood-Schätzer (nachfolgend als "uML"-Schätzer bezeichnet) für Frequenz und Phase vorgestellt, der in der nicht vorveröffentlichten Anmeldung DE 103 09 262 beschrieben ist und in den erfindungsgemäßen Schätzer (long_uML-Schätzer) für große Beobachtungslängen integriert ist.

Der uML-Algorithmus ist eine exakte Umsetzung des Maximum-Likelihood-Prinzips, d.h. er ist der optimale Schätzer für einen AWGN-Kanal. Es werden dabei keine Näherungen angewendet, so daß keine nichtlinearen Phänomene wie das Cycle-Slipping der Phase auftreten können. Dadurch wird auch bei sehr niedrigen Störabständen der ideale ML-Schätzwert ermittelt, d.h. die Schätzgenauigkeit ist nur durch die Cramér-Rao-Grenze festgelegt. Dabei arbeitet der Algorithmus auch für Symbolalphabete mit nicht konstanten Beträgen $|a_v|$ optimal.

Das Verfahren wird für den sogenannten Data-Aided-Fall (DA) hergeleitet, d.h. zur Durchführung der Frequenz- und Phasenschätzung wird eine Datensequenz übertragen, welche dem Empfänger bekannt ist. Es sei jedoch erwähnt, daß durch Anwendung einer Nichtlinearität zur Entfernung der Modulation der uML-Algorithmus auch für den Non-Data-Aided-Fall (NDA) verwendet werden kann.

Dem Schätzproblem liegt das Übertragungsmodell nach Fig. 3 zugrunde:

Die ungestörte Sendefolge **s** ist durch

$$s_v = g \cdot a_v \cdot e^{j(2\pi \cdot \Delta f \cdot v \cdot T_s + \phi)} \qquad (6)$$

vorgegeben und wird im AWGN-Kanal durch eine additive, weiße Rauschfolge **n** gestört.

Es entsteht dabei die Empfangsfolge **r** mit:

$$r_v = s_v + n_v \qquad (7)$$

Auf der Empfängerseite sollen nun aus der Empfangsfolge **r** nach dem Maximum-Likelihood-Prinzip folgende Parameter der Sendefolge **s** geschätzt werden:

- Frequenzversatz $\Delta f$

- Phasenversatz $\phi$

- Verstärkung $g$ (reell)

Die Maximum-Likelihood-Schätzung der obengenannten Parameter erfolgt durch Minimierung der Log-Likelihood-Funktion. Folgende Gleichung (8) ist die für das vorliegende Übertragungsmodell bzw. Schätzproblem zutreffende Log-Likelihood-Funktion:

$$L(\tilde{g}, \tilde{\Delta f}, \tilde{\phi}) = \sum_{v=0}^{N_{Sym}-1} \left| r_v - \tilde{g} \cdot a_v \cdot e^{j(2\pi \cdot \tilde{\Delta f} \cdot v \cdot T_a + \tilde{\phi})} \right|^2 \qquad (8)$$

Mit der Kreisfrequenz

$$\Delta\omega = 2\pi \cdot \Delta f \tag{9}$$

und durch Ausmultiplizieren erhält man für die Log-Likelihood-Funktion:

$$L(\tilde{g}, \Delta\tilde{\omega}, \tilde{\phi}) \;=\; \sum_{v=0}^{N_{Sym}-1}\left(|r_v|^2 + \tilde{g}^2 \cdot |a_v|^2 - 2 \cdot \mathrm{Re}\left\{\tilde{g} \cdot r_v \cdot a_v^{\bullet} \cdot e^{-j(\Delta\tilde{\omega}v\cdot T_a + \tilde{\phi})}\right\}\right) \tag{10}$$

Da der Date-Aided-Fall vorliegt, ist die gesendete Symbolfolge *a* dem Empfänger bekannt. Die Abhängigkeit der Empfangsfolge *r* von der Symbolfolge *a* kann deshalb entfernt werden. Es wird dazu die modulationsbereinigte Folge *x* eingeführt mit

$$x_v = r_v \cdot a_v^{\bullet} \tag{11}$$

Damit ergibt sich für die Log-Likelihood-Funktion:

$$L(\tilde{g}, \Delta\tilde{\omega}, \tilde{\phi}) \;=\; \sum_{v=0}^{N_{Sym}-1}\left(|r_v|^2 + \tilde{g}^2 \cdot |a_v|^2 - 2 \cdot \mathrm{Re}\left\{\tilde{g} \cdot x_v \cdot e^{-j(\Delta\tilde{\omega}v\cdot T_a + \tilde{\phi})}\right\}\right) \tag{12}$$

Nachfolgend wird nun gezeigt, daß das vorliegende mehrdimensionale Schätzproblem in unabhängige, eindimensionale Schätzprobleme aufgeteilt werden kann, d.h. daß Frequenz, Phase und Verstärkung voneinander separiert werden können.

Aus (12) erkennt man, daß Frequenz und Phase nur im letzten Term auftreten. Die vorliegende Log-Likelihood-Funktion wird daher bezüglich $\Delta f$ und $\phi$ minimiert, indem man den letzten Term maximiert. Da dabei die Verstärkung g und der Vorfaktor keinen Einfluß auf die Lage des Maximums haben, kann sie weggelassen werden. Man erhält so die äquivalente, zu maximierende Log-Likelihood-Funktion für die Frequenz- und Phasenschätzung:

$$L_1(\Delta\tilde{\omega}, \tilde{\phi}) \;=\; \sum_{v=0}^{N_{Sym}-1} \mathrm{Re}\left\{x_v \cdot e^{-j(\Delta\tilde{\omega}v\cdot T_a + \tilde{\phi})}\right\} \tag{13}$$

Die darin enthaltene Realteilbildung darf mit der Summation vertauscht werden:

$$L_1(\Delta\tilde{\omega}, \tilde{\phi}) \;=\; \mathrm{Re}\left\{ e^{-j\cdot\tilde{\phi}} \cdot \underbrace{\sum_{v=0}^{N_{Sym}-1} x_v \cdot e^{-j\cdot\Delta\tilde{\omega}v\cdot T_a}}_{Z} \right\} \tag{14}$$

Diese Funktion ist maximal, wenn die Phase $\tilde{\phi}$ den komplexen Gesamtzeiger $Z$ auf die Realteilachse dreht. Für die geschätzte Phase gilt daher:

$$\hat{\phi} \;=\; \arg\{Z\} \;=\; \arg\left\{ \sum_{v=0}^{N_{Sym}-1} x_v \cdot e^{-j\cdot\Delta\hat{\omega}v\cdot T_a} \right\} \tag{15}$$

Es ist also festzuhalten, daß die Log-Likelihood-Funktion $L_1$ aus (14) dadurch maximiert wird, daß die Frequenz $\Delta\tilde{\omega}$ den Betrag des Gesamtzeigers $|\vec{z}|$ maximiert und gleichzeitig $\vec{z}$ durch die optimale Phase auf die Realteilachse gedreht wird.

Es ergibt sich daraus folgende, nur noch von der Frequenz abhängige Log-Likelihood-Funktion, welche wiederum zu maximieren ist:

$$L_2(\Delta\tilde{\omega}) = \left| \sum_{v=0}^{N_{Sym}-1} x_v \cdot e^{-j\cdot\Delta\tilde{\omega}v\cdot T_a} \right| \qquad (16)$$

Man erkennt nun eine Ähnlichkeit zwischen der vorliegenden Log-Likelihood-Funktion und der Fast Fourier Transformation FFT. Mit Hilfe der FFT kann die LLF für bestimmte diskrete Frequenzen berechnet werden.

Die Definition der FFT lautet

$$X_\mu = FFT\{x_v\} = \sum_{v=0}^{N_{FFT}-1} x_v \cdot e^{-j\cdot\frac{2\pi}{N_{FFT}}\cdot\mu\cdot v} \qquad (17)$$

mit

$$N_{FFT} = 2^k \qquad \text{und} \qquad k \in N \qquad (18)$$

Die Quantisierung der FFT im Frequenzbereich, d.h. die Frequenzauflösung, beträgt dabei:

$$f_Q = \frac{1}{N_{FFT}\cdot T_a} \qquad (19)$$

Beim Vergleich der Summation aus (16) mit der FFT-Definition erkennt man, daß eine Äquivalenz vorliegt, falls $\Delta\tilde{\omega}$ auf eine der diskreten Frequenzen der FFT fällt.

Wenn also der Zusammenhang

$$\Delta\tilde{\omega} \stackrel{!}{=} 2\pi\cdot\mu\cdot f_Q \qquad (20)$$

erfüllt ist, entspricht die zu maximierende LLF dem Betrag von $FFT\{x_v\}$ :

$$L_2(\Delta\tilde{\omega}) = \left| \sum_{v=0}^{N_{Sym}-1} x_v \cdot e^{-j\cdot\Delta\tilde{\omega}v\cdot T_a} \right| = \left| FFT\{x_v\} \right|_{f=\Delta\tilde{\nu}} \qquad (21)$$

Dies bedeutet, daß die Frequenzschätzung in zwei Abschnitten durchgeführt werden kann. Zunächst wird ein grober Frequenz-Schätzwert $\Delta\hat{f}_{coarse}$ dadurch ermittelt, daß das Betragsmaximum der Fouriertransformierten von $x_v$ gesucht wird. Allerdings kann dabei ein Schätzfehler

$$\left| \Delta f_{rest} \right| \leq \frac{f_Q}{2} \qquad (22)$$

auftreten, wenn die zu schätzende Frequenz $\Delta f$ nicht genau einer der diskreten Frequenzen des Frequenzrasters der FFT entspricht.

Falls die FFT-Länge $N_{FFT}$ entsprechend groß ist, wird der verbleibende Schätzfehler $\Delta f_{rest}$ jedoch so klein, daß er in einer nachfolgenden Feinschätzstufe durch lineare Approximation ermittelt werden kann. Dabei stellt sich jedoch das Problem, daß eine Linearisierung der Betragsfunktion aus (16) nicht möglich ist.

Folgendes Hilfsmittel führt zur Lösung: Da die LLF aus (16) wegen der Betragsbildung reell und für alle $\Delta\tilde{\omega}$ positiv ist, wird durch eine Quadrierung die Lage des Maximums der LLF nicht verändert. Es ergibt sich die äquivalente LLF

$$L_3(\Delta\tilde{\omega}) = \left| \sum_{v=0}^{N_{Sym}-1} x_v \cdot e^{-j\cdot\Delta\tilde{\omega}\cdot v\cdot T_a} \right|^2 , \qquad (23)$$

von der nachfolgend gezeigt wird, daß sie linearisierbar ist. Mit dem Zusammenhang

$$|z|^2 = z \cdot z^* \qquad (24)$$

für komplexe Größen erhält man für die vorliegende LLF:

$$L_3(\Delta\tilde{\omega}) = \left( \sum_{\alpha=0}^{N_{Sym}-1} x_\alpha \cdot e^{-j\cdot\Delta\tilde{\omega}\cdot\alpha\cdot T_a} \right) \cdot \left( \sum_{\beta=0}^{N_{Sym}-1} x_\beta \cdot e^{-j\cdot\Delta\tilde{\omega}\cdot\beta\cdot T_a} \right)^*$$

$$= \sum_{\alpha=0}^{N_{Sym}-1} \sum_{\beta=0}^{N_{Sym}-1} x_\alpha \cdot x_\beta^* \cdot e^{-j\cdot\Delta\tilde{\omega}(\alpha-\beta)T_a} \qquad (\text{reell!}) \qquad (24)$$

Nun werden die einzelnen Summenelemente von (24) in eine schematische Matrix eingetragen, die in Fig. 4 dargestellt ist.

Man erkennt dabei folgende Symmetrieeigenschaften:

- Die Haupt- und Nebendiagonalen besitzen einen jeweils identischen Drehzeiger $e^{j\cdots}$

- Die Matrix ist hermetisch, d.h. die Matrixelemente M haben paarweise konjugiert komplexe Werte:

$$M_{\alpha,\beta} = M_{\beta,\alpha}^*$$

- Die Hauptdiagonale ist reell.

Diese Symmetrieeigenschaften lassen sich nutzen, indem man folgende alternative Summationsindizes einführt:

$$\nu = \alpha - \beta \qquad \text{und} \qquad \gamma \qquad (25)$$

Mit Hilfe der Matrix veranschaulicht bedeutet dies, daß man nun nicht mehr über die Zeilen und Spalten der Matrix aufsummiert, sondern die Matrixelemente jeder Diagonalen aufsummiert und dann die Ergebnisse der einzelnen Diagonalen addiert. Dabei nutzt man für die Addition der paarweise konjugiert komplexen Werte zusätzlich folgende Beziehung:

$$z + z^{\bullet} = 2 \cdot \operatorname{Re}\{z\} \tag{26}$$

Es ergibt somit sich die folgende, zu (24) äquivalente Darstellung:

$$L_3\left(\Delta\tilde{\omega}\right) = \sum_{\gamma=0}^{N_{Sym}-1} \left|x_\gamma\right|^2 + 2 \cdot \operatorname{Re}\left\{\sum_{\nu=0}^{N_{Sym}-1} \cdot \sum_{\gamma=\nu}^{N_{Sym}-1} x_\gamma \cdot x_{\gamma-\nu}^{\bullet} \cdot e^{-j\cdot\Delta\tilde{\omega}\cdot\nu\cdot T_o}\right\} \tag{27}$$

Da der erste Term, der die Hauptdiagonale der Matrix beschreibt, nicht von der Frequenz abhängt, kann er zusammen mit dem Vorfaktor des zweiten Terms weggelassen werden, ohne das Maximum der LLF zu verschieben. Man erhält dadurch eine relativ einfache, geschlossene Darstellung:

$$L_4\left(\Delta\tilde{\omega}\right) = \operatorname{Re}\left\{\sum_{\nu=0}^{N_{Sym}-1} \underbrace{\sum_{\gamma=\nu}^{N_{Sym}-1} x_\gamma \cdot x_{\gamma-\nu}^{\bullet}}_{x_\nu * x_{-\nu}^{\bullet}} \cdot e^{-j\cdot\Delta\tilde{\omega}\cdot\nu\cdot T_o}\right\} \tag{28}$$

In dieser LLF liegt eine (zyklische) Faltung der Form

$$y_\nu = x_\nu * x_{-\nu}^{\bullet} \tag{29}$$

vor. Man erkennt, daß sich die Folge **y** mit Hilfe der Fouriertransformation berechnen läßt:

$$Y_\mu = FFT\{y_\nu\} = \left|X_\mu\right|^2 = \left|FFT\{x_\nu\}\right|^2 \tag{30}$$

Zusätzlich besitzt **y** nachstehende Eigenschaften:

-   Konjugiert komplexe Symmetrie der Folgenglieder:

$$y_{-\nu} = y_\nu^{\bullet} \tag{31}$$

-   Die Folge **y** ist nur im Bereich

$$-\left(N_{Sym}-1\right) \le \nu \le N_{Sym}-1 \tag{32}$$

ungleich Null

Mit der definierten Folge **y** vereinfacht sich die LLF zu:

$$L_4\left(\Delta\tilde{\omega}\right) = \mathrm{Re}\left\{\sum_{v=0}^{N_{Sym}-1} y_v \cdot e^{-j\cdot\Delta\tilde{\omega}\cdot v\cdot T_a}\right\} \qquad (33)$$

Mit Hilfe dieser Form der LLF kann eine Feinschätzung durchgeführt werden. Für das Verständnis der Grobschätzung ist jedoch eine weitere Umformung der LLF hilfreich. Zunächst kann (26) angewendet werden, was zu folgender Darstellung der LLF führt:

$$L_4\left(\Delta\tilde{\omega}\right) = \frac{1}{2}\cdot\left(\sum_{v=0}^{N_{Sym}-1} y_v \cdot e^{-j\cdot\Delta\tilde{\omega}\cdot v\cdot T_a} + \sum_{v=0}^{N_{Sym}-1} y_v^* \cdot e^{+j\cdot\Delta\tilde{\omega}\cdot v\cdot T_a}\right) \qquad (34)$$

Nun kann man die Symmetrieeigenschaft von **y** aus (31) nutzen:

$$L_4\left(\Delta\tilde{\omega}\right) = \frac{1}{2}\cdot\left(\sum_{v=0}^{N_{Sym}-1} y_v \cdot e^{-j\cdot\Delta\tilde{\omega}\cdot v\cdot T_a} + \sum_{v=-(N_{Sym}-1)}^{0} y_v \cdot e^{-j\cdot\Delta\tilde{\omega}\cdot v\cdot T_a}\right)$$

$$= \frac{1}{2}\cdot\left(\sum_{v=-(N_{Sym}-1)}^{N_{Sym}-1} y_v \cdot e^{-j\cdot\Delta\tilde{\omega}\cdot v\cdot T_a} + y_0\right) \qquad (35)$$

Da der hintere Term $y_0$ und der Vorfaktor keinen Einfluß auf die Lage des Maximums der LLF haben, können sie weggelassen werden. Dadurch erhält man die äquivalente LLF:

$$L_5\left(\Delta\tilde{\omega}\right) = \sum_{v=-(N_{Sym}-1)}^{N_{Sym}-1} y_v \cdot e^{-j\cdot\Delta\tilde{\omega}\cdot v\cdot T_a} \qquad (36)$$

Man erkennt, daß es sich dabei um die Fourier-Transformation der Folge $y_v$ bei der Frequenz $\Delta\tilde{f}$ handelt, da die Summationsgrenzen aufgrund der zyklischen Faltung der FFT verschiebbar sind. Somit gilt der Zusammenhang:

$$L_5\left(\Delta\tilde{\omega}\right) = \sum_{v=0}^{2\cdot(N_{Sym}-1)} y_v \cdot e^{-j\cdot\Delta\tilde{\omega}\cdot v\cdot T_a} = FFT\{y_v\}\big|_{f=\Delta\tilde{f}} \qquad (37)$$

Zusätzlich läßt sich ablesen, daß für die Mindestlänge dieser FFT gilt:

$$N_{FFT} \geq 2\cdot N_{Sym} - 1 \qquad (38)$$

Bei kleinerem $N_{FFT}$ käme es zu Aliasing im Zeitbereich.

Jedoch sei bereits hier darauf hingewiesen, daß die Genauigkeit einer Grobschätzung mit dieser FFT-Länge nicht immer für eine sichere Konvergenz des iterativen Algorithmus der Feinschätzstufe ausreicht. Es ist deshalb entweder eine entsprechend größere FFT-Länge notwendig oder es muß entsprechend einer bevorzugten Weiterbildung des erfindungsgemäßen Verfahrens nach einer Frequenz-Grobschätzung mit $N_{FFT} = 2\cdot N_{Sym}$ die Frequenzauflösung entsprechend erhöht werden. Das Verfahren zur nachträglichen Verfeinerung der Frequenzauflösung der Grobschätzung ist weiter unten beschrieben.

Zusammengefaßt kann man aus den bisherigen Herleitungen erkennen, daß eine zweistufige Frequenzschätzung mit folgenden Schritten sinnvoll ist:

- Grobschätzung von $\Delta\hat{f}$ mittels FFT

- Iterative Feinschätzung mittels linearer Interpolation

Die Grobschätzung wird in folgenden Schritten durchgeführt:

a) Berechne die modulationsbereinigte Folge **x** nach (11)
b) Erhöhe durch Zero-Padding (Einfügen von Nullen) am Ende der Folge die Länge von **x** auf die notwendige FFT-Länge $N_{FFT}$
c) Berechne die Fouriertransformierte $X_\mu = FFT\{x_\nu\}$
d) Suche nach (21) das Maximum von $|X_\mu|$. Die Betragsbildung ist allerdings numerisch aufwendig. Daher ist es sinnvoller, statt dessen nach (30) das Betragsquadrat von $X_\mu$ zu bilden:

$$Y_\mu = \left| X_\mu \right|^2$$

Die nun für $Y_\mu$ durchgeführte Maximumsuche liefert als Ergebnis den Index der diskreten Frequenz, bei der das Maximum vorliegt:

$$\mu_{max} = \arg\{\max(Y_\mu)\} \qquad (39)$$

Daraus ergibt sich mit (19) der Grobschätzwert der Frequenz:

$$\Delta\hat{f}_{coarse} = \begin{cases} \mu_{max} \cdot f_Q & \text{für } \mu_{max} \leq N_{FFT}/2 \\ (\mu_{max} - N_{FFT}) \cdot f_Q & \text{für } \mu_{max} > N_{FFT}/2 \end{cases} \qquad (40)$$

e) Berechne die Folge **y** mit Hilfe der inversen FFT:

$$y_\nu = IFFT\{Y_{\mu+\mu max}\} \qquad (41)$$

f) Kompensiere die Folge **y** mit dem ermittelten Grobschätzwert der Frequenz:

$$y_{\nu,comp} = y_\nu \cdot e^{-j\cdot 2\pi\cdot\Delta\hat{f}_{coarse}\cdot\nu\cdot T_e} \qquad (42)$$

Man erkennt mit (40), daß die grob frequenzkompensierte Folge **y**$_{comp}$ alternativ auch mit Hilfe des Modulationssatzes berechnet werden kann:

$$y_{\nu,comp} = IFFT\{Y_{\mu+\mu max}\} \qquad (43)$$

Nach der Kompensation der Folge **y** mit dem groben Frequenzschätzwert $\Delta f_{coarse}$ verbleibt aufgrund der endlichen diskreten Frequenzauflösung der FFT der Frequenzversatz $\Delta f_{fine}$, der von der Feinschätzstufe zu schätzen ist. Der Gesamtschätzwert setzt sich somit aus

$$\hat{\Delta f} = \hat{\Delta f}_{coarse} + \hat{\Delta f}_{fine} \tag{44}$$

zusammen.

Dabei kann $\hat{\Delta f}_{fine}$ durch Maximierung der zu (33) äquivalenten LLF

$$L_4\left(\Delta\tilde{\omega}_{fine}\right) = \mathrm{Re}\left\{\sum_{\nu=0}^{N_{Sym}-1} y_{\nu,comp} \cdot e^{-j\cdot\Delta\tilde{\omega}_{fine}\cdot\nu\cdot T_a}\right\} \tag{45}$$

ermittelt werden, indem man die Ableitung nach der Frequenz bildet und gleich Null setzt:

$$\left.\frac{\delta L_4\left(\Delta\tilde{\omega}_{fine}\right)}{\delta\Delta\tilde{\omega}_{fine}}\right|_{\Delta\tilde{\omega}_{fine}=\Delta\hat{\omega}_{fine}} = \mathrm{Re}\left\{\sum_{\nu=0}^{N_{Sym}-1} y_{\nu,comp} \cdot e^{-j\cdot\Delta\hat{\omega}_{fine}\cdot\nu\cdot T_a} \cdot\left(-j\cdot\nu\cdot T_a\right)\right\} \overset{!}{=} 0 \tag{46}$$

Da durch eine entsprechende Wahl von $N_{FTT}$ der Grobschätzstufe das zu schätzende $\Delta\omega_{fine}$ ausreichend klein ist, darf linearisiert werden. Wendet man die für kleine x zulässige Linearisierung der Exponentialfunktion

$$e^x \approx 1 + x \tag{47}$$

auf die vorliegende Gleichung an, so erhält man:

$$-T_a\cdot\mathrm{Re}\left\{\sum_{\nu=0}^{N_{Sym}-1} j\cdot\nu\cdot y_{\nu,comp}\cdot\left(1 - j\cdot\Delta\hat{\omega}_{fine}\cdot\nu\cdot T_a\right)\right\}\overset{!}{=}0$$

$$\mathrm{Re}\left\{\sum_{\nu=0}^{N_{Sym}-1}\nu^2\cdot y_{\nu,comp}\cdot\Delta\hat{\omega}_{fine}\cdot T_a\right\} = -\mathrm{Re}\left\{\sum_{\nu=0}^{N_{Sym}-1} j\cdot\nu\cdot y_{\nu,comp}\right\}$$

$$\Delta\hat{\omega}_{fine}\cdot T_a\cdot\mathrm{Re}\left\{\sum_{\nu=0}^{N_{Sym}-1}\nu^2\cdot y_{\nu,comp}\right\} = \mathrm{Im}\left\{\sum_{\nu=0}^{N_{Sym}-1}\nu\cdot y_{\nu,comp}\right\} \tag{48}$$

Daraus ergibt sich schließlich die gewünschte Berechnungsvorschrift für den Frequenz-Feinschätzwert:

$$\Delta\hat{f}_{fine} = \frac{1}{2\pi\cdot T_a}\cdot\frac{\mathrm{Im}\left\{\sum_{\nu=0}^{N_{Sym}-1}\nu\cdot y_{\nu,comp}\right\}}{\mathrm{Re}\left\{\sum_{\nu=0}^{N_{Sym}-1}\nu^2\cdot y_{\nu,comp}\right\}} \tag{49}$$

Aufgrund des Linearisierungsfehlers der Feinschätzstufe entspricht der Gesamtschätzwert

$$\Delta \hat{f} = \Delta \hat{f}_{coarse} + \Delta \hat{f}_{fine}$$

nicht exakt der zu schätzenden Frequenz $\Delta f$. Eine Verbesserung schafft hier die iterative Anwendung des Feinschätzalgorithmus. Dadurch kann der Linearisierungsfehler beliebig verkleinert werden.

Die Feinschätzung der Frequenz in *nof_it* Iterationen läuft dabei in folgenden Schritten ab:

a) Berechne den Feinschätzwert $\Delta \hat{f}_{fine}^{\{it\}}$ der aktuellen Iteration nach der iterativ anwendbaren Berechnungsvorschrift aus (49)

$$\Delta \hat{f}_{fine}^{\{it\}} = \frac{1}{2\pi \cdot T_a} \cdot \frac{\mathrm{Im}\left\{ \sum_{v=0}^{N_{Sym}-1} v \cdot y_{v,comp}^{\{it\}} \right\}}{\mathrm{Re}\left\{ \sum_{v=0}^{N_{Sym}-1} v^2 \cdot y_{v,comp}^{\{it\}} \right\}} \tag{50}$$

Für die erste Frequenzschätzung wird dabei die am Ausgang der Grobschätzstufe vorliegende, nur mit $\Delta f_{coarse}$ kompensierte Folge *ycomp* verwendet, d.h.

$$y_{v,comp}^{\{1\}} = y_{v,comp} \tag{51}$$

b) Addiere alle bisherigen Feinschätzwerte auf zu $\Delta \hat{f}_{fine\_total}$:

$$\Delta \hat{f}_{fine\_total} = \sum_{\alpha=1}^{it} \Delta \hat{f}_{fine}^{\{it\}} \tag{52}$$

c) Bilde die für die nächste Feinschätzung benötigte Eingangsfolge durch Kompensation von $y_{comp}$ mit $\Delta \hat{f}_{fine\_total}$:

$$y_{v,comp}^{\{it\}} = y_{v,comp} \cdot e^{-j \cdot 2\pi \cdot \Delta \hat{f}_{fine\_total} \cdot v \cdot T_a} \tag{53}$$

d) Ist die gewünschte Iterationszahl *nof_it* noch nicht erreicht, so wird die nächste Iteration entsprechend Schritt a) bis c) durchgeführt.

e) Sobald *nof_it* Iterationen durchgeführt wurden, steht der Gesamt-Feinschätzwert $\Delta \hat{f}_{fine\_total} \Big|_{it=nof\_it}$ als Ausgangsgröße der iterativen Feinschätzstufe zur Verfügung.

Der gesuchte Gesamt-Frequenzschätzwert $\Delta \hat{f}$ für die zu schätzende Frequenz $\Delta f$ berechnet sich aus den Ergebnissen der Grob- und Feinschätzung:

$$\hat{\Delta f} = \hat{\Delta f}_{coarse} + \hat{\Delta f}_{fine\_total}\Big|_{it=nof\_it} \qquad (54)$$

Nach erfolgter Schätzung der Frequenz kann mit dem Frequenz-Schätzwert $\hat{\Delta f}$ die Phase $\phi$ nach (15) geschätzt werden:

$$\hat{\phi} = \arg\{\sum_{v=0}^{N_{Sym}-1} x_v \cdot e^{-j\cdot\Delta\hat{\omega}\cdot v\cdot T_a}\} \qquad (55)$$

Die Schätzung der Verstärkung $g$ Schätzers wird der Vollständigkeit halber hier mit aufgeführt.

Zur Schätzung der Verstärkung muß die Log-Likelihood-Funktion (12) maximiert werden. Dazu wird die Ableitung der LLF nach $\tilde{g}$ gleich Null gesetzt:

$$\frac{\partial L(\hat{g},\Delta\tilde{\omega},\tilde{\phi})}{\partial \tilde{g}}\Big|_{\tilde{g}=\hat{g}\,;\,\Delta\tilde{\omega}=\Delta\hat{\omega}\,;\,\tilde{\phi}=\hat{\phi}} \stackrel{!}{=} 0$$

$$\sum_{v=0}^{N_{Sym}-1}\left(2\cdot\hat{g}\cdot|a_v|^2 - 2\cdot\mathrm{Re}\left\{x_v \cdot e^{-j(\Delta\hat{\omega}v T_a + \hat{\phi})}\right\}\right) \stackrel{!}{=} 0 \qquad (56)$$

Daraus berechnet sich mit den zuvor ermittelten Frequenz- und Phasenschätzwerten der Schätzwert für die Verstärkung als:

$$\hat{g} = \frac{\sum_{v=0}^{N_{Sym}-1}\mathrm{Re}\left\{x_v \cdot e^{-j(\Delta\hat{\omega}v T_a + \hat{\phi})}\right\}}{\sum_{v=0}^{N_{Sym}-1}|a_v|^2} \qquad (57)$$

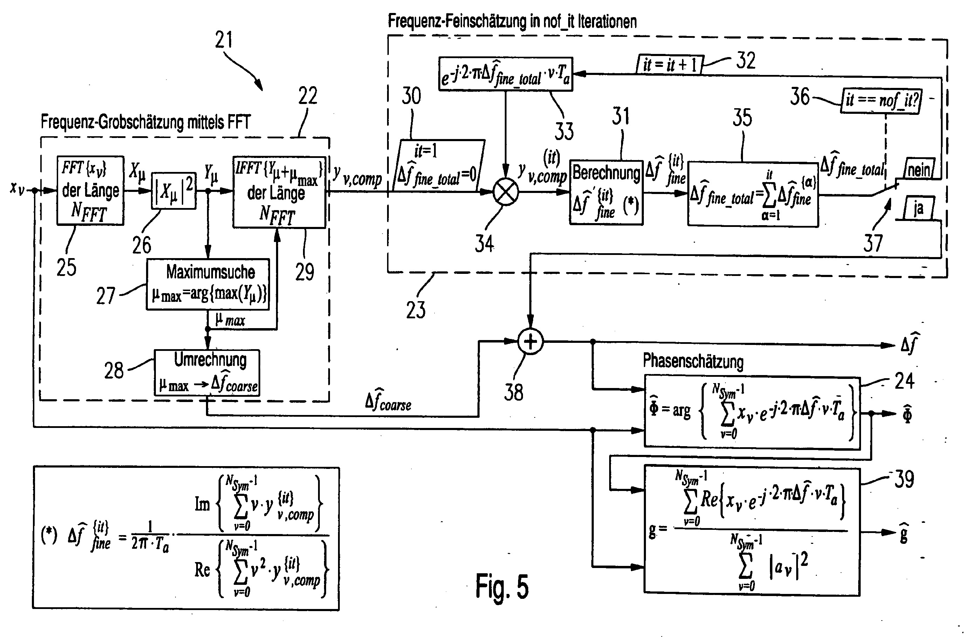

Der vorstehend ausführlich beschriebene Ablauf der Frequenz- und Phasenschätzung mit dem universellen Maximum-Likelihood-Schätzer ist in Fig. 5 schematisch dargestellt.

Das in Fig. 5 dargestellte Blockschaltbild des erfindungsgemäßen Frequenz- und Phasenschätzers 1 teilt sich in einen Frequenz-Grobschätzer 22, einen Frequenz-Feinschätzer 23 und einen Phasenschätzer 24 auf. Dem Frequenz-Grobschätzer 22 wird die digitale Eingangs-Signalfolge $x_v$ zugeführt. In einem Block 25 erfolgt eine diskrete Fourier-Transformation, vorzugsweise eine schnelle Fourier-Transformation *FFT*. Die Länge der Fourier-Transformation muß mindestens doppelt so lang sein, wie die Länge der Eingangs-Signalfolge $x_v$, d. h. es muß gelten $N_{FFT}\geq2\cdot N_{Sym}-1$. Durch die Fourier-Transformation entsteht im Frequenzraum die Fourier-Folge $X_\mu$. In dem Block 26 erfolgt eine Betragsbildung oder Betragsquadratbildung. In einem Block 27 wird das Maximum des Betrags der Fourier-Folge oder, da dies numerisch einfacher und äquivalent ist, das Maximum des Betragsquadrats der Fourier-Folge gesucht.

Der Index $\mu_{max}$ des diskreten Werts $Y_{\mu,max}$ der Fourier-Folge, bei welchem das Maximum des Betrags bzw. Betragsquadrats vorliegt wird an dem Block 28 weitergegeben, in welchem eine Umrechnung in den Grobschätzwert $\hat{\Delta f}_{coarse}$ der Frequenz gemäß Formel (40) vorgenommen wird. In dem Block 29 erfolgt eine inverse Fourier-Transformation, jedoch nicht der ursprünglichen Betragsquadrat-Fourier-Folge $Y_\mu$, sondern der um den dem Maximum entsprechenden Index $\mu_{max}$ verschobenen Fourier-Folge $Y_{\mu+\mu_{max}}$. Nach Kompensation mit Formel (42) entsteht die rücktransformierte Signalfolge $y_{v,comp}$.

Durch den Feinschätzer 23 erfolgt eine Feinschätzung der Frequenz. Dargestellt ist der bevorzugte Fall des iterativen Vorgehens. In einem Block 30 wird zunächst der Iterationszähler *it* auf 1 und der gesamte Feinschätzwert

$\Delta \hat{f}_{fine\_total}$ auf Null gesetzt. In einem Block 31 erfolgt eine Berechnung des Feinschätzwerts der Frequenz gemäß Formel (50). Für den nächsten Iterationsschritt wird der Iterationszähler *it* im Block 32 inkrementiert. In Block 33 wird der in Formel (53) benötigte Kompensationsfaktor zur Verfügung gestellt. Die Kompensation entsprechend Formel (53) erfolgt schließlich durch den Multiplizierer 34.

Nach Berechnung des Feinschätzwert-Iterationsbeitrags dieser Iterationsstufe nach Formel (50) in Block 31 werden im Block 35 die Feinschätzwert-Iterationsbeiträge der einzelnen Iterationsstufen zum Feinschätzwert-Gesamt-wert $\Delta \hat{f}_{fine-total}$ aufaddiert. Hat der Iterationszähler *it* die Anzahl der vorgegebenen Iterationsstufen *nof_it* erreicht, so wird der Feinschätzwert-Gesamtbetrag über den nur symbolisch dargestellten Schalter 37 ausgegeben und in dem Addierer 38 mit dem Grobschätzwert zur Erzeugung eines Gesamtschätzwerts der Frequenz addiert.

Der Gesamtschätzwert der Frequenz und die Eingangs-Signalfolge werden dem Phasenschätzer 24 zugeführt, der entsprechend Formel (55) den Schätzwert der Phase berechnet.

Der Schätzwert der Phase kann zusammen mit der Eingangs-Signalfolge dem Block 25 zugeführt werden, der den Schätzwert für die Verstärkung gemäß Formel (57) berechnet.

Bei der Frequenz-Grobschätzung des erfindungsgemäßen universellen Maximum-Likelihood-Schätzers wird der Frequenzschätzwert mit Hilfe einer Fast-Fourier-Transformation ermittelt. Dabei ist nach (38) zu beachten, daß eine minimale FFT-Länge von

$$N'_{FFT} \geq 2 \cdot N_{Sym} - 1$$

eingehalten werden muß, um Aliasing-Effekte im Zeitbereich zu vermeiden. Jedoch kann diese FFT-Länge nicht ausreichen. Aufgrund eines zu großen maximalen Schätzfehlers $\Delta f_{rest,max}$ am Ausgang der Grobschätzstufe ist bei dieser FFT-Länge eine sichere Konvergenz des nachfolgenden iterativen Feinschätzalgorithmus nicht immer gewährleistet. Der zusätzliche Rechenaufwand und Speicherbedarf durch eine entsprechende Erhöhung der FFT-Länge in der Grobschätzstufe wäre jedoch beträchtlich.

Eine Abhilfe stellt das nachfolgende Verfahren als vorteilhafte Weiterbildung des erfindungsgemäßen Verfahrens dar. Hierbei wird zunächst unter Beachtung von (18) eine Grobschätzung mit

$$N_{FFT} = 2 \cdot N_{Sym} \tag{58}$$

durchgeführt. Mit geringem Zusatzaufwand wird dann durch Maximierung der entsprechenden LLF bei bestimmten Frequenzen die selbe Frequenzauflösung und damit auch die selbe Schätzgenauigkeit wie bei einer Grobschätzung mit $N_{FFT} = 4 \cdot N_{Sym}$ erreicht. Damit ist sowohl die Konvergenz des Feinschätzalgorithmus als auch die Einhaltung festgelegter Genauigkeitsgrenzen sicher gewährleistet.

Die FFT der Grobschätzstufe mit der FFT-Länge $N_{FFT}$ hat nach (19) eine Frequenzauflösung von

$$f_Q = \frac{1}{N_{FFT} \cdot T_a} = \frac{1}{2 \cdot N_{Sym} \cdot T_a} \tag{59}$$

Ziel ist es nun, diese Auflösung im Bereich um den gefundenen Grobschätzwert $\Delta \hat{f}_{coarse}$ nachträglich zu verdoppeln und dadurch den maximalen verbleibenden Frequenzversatz $\Delta f_{rest,max}$ am Ausgang des Grobschätzers 22 zu halbieren.

Ausgangspunkt ist wie bei der Feinschätzung die Log-Likelihood-Funktion nach (45), bei der bereits die Kom-pensation mit dem Grobschätzwert $\Delta \hat{f}_{coarse}$ berücksichtigt ist:

$$L_4 \left( \widetilde{\Delta f} \right) = \mathrm{Re} \left\{ \sum_{\nu=0}^{N_{Sym}-1} y_{\nu,comp} \cdot e^{-j \cdot 2\pi \cdot \widetilde{\Delta f} \cdot \nu \cdot T_a} \right\} \tag{60}$$

Durch Maximierung dieser LLF erhält man einen Schätzwert für den verbleibenden Frequenzversatz

$$\Delta \hat{f}_{rest} = \Delta f - \Delta \hat{f}_{coarse} \tag{61}$$

am Ausgang der Grobschätzstufe.

Die angesprochene Verdopplung der Frequenzauflösung gegenüber der Auflösung $f_Q$ des Grobschätzers erreicht man nun dadurch, daß man die Funktionswerte der LLF $L_4$ bei den Frequenzen

$$f_{+\frac{1}{2}Q} = +\frac{f_Q}{2} = +\frac{1}{4 \cdot N_{Sym} \cdot T_a} \tag{62}$$

und

$$f_{-\frac{1}{2}Q} = -\frac{f_Q}{2} = -\frac{1}{4 \cdot N_{Sym} \cdot T_a} \tag{63}$$

berechnet und mit dem Funktionswert von $L_4$ bei $f = 0$ vergleicht. Aus den drei Frequenzen wird jene als Schätzfrequenz $\Delta \hat{f}_{int}$ ausgewählt, bei der die LLF den größten Wert aufweist und die somit der zu schätzenden Frequenz $\Delta f_{rest}$, am nächsten kommt. Der nach der Kompensation der Folge $y_{comp}$ mit dem Schätzwert $\Delta \hat{f}_{int}$ noch verbleibende Frequenzversatz wird anschließend von dem vorzugsweise iterativ arbeitenden Feinschätzer 23 ermittelt.

Mit anderen Worten wird durch das obige Verfahren untersucht, ob eine der Frequenzen $\Delta \hat{f}_{coarse} \pm 0,5 \cdot f_Q$ genauer als $\Delta \hat{f}_{coarse}$ der vom universellen Maximum-Likelihood-Schätzer zu schätzenden Frequenz $\Delta f$ entspricht. Somit erreicht man die selbe Auflösung und Schätzgenauigkeit wie bei einer Grobschätzung mit $N_{FFT} = 4 \cdot N_{Sym}$.

Mathematisch läßt sich die Ermittlung des Schätzwertes $\Delta \hat{f}_{int}$ zur nachträglichen Erhöhung der Frequenzauflösung wie folgt darstellen:

$$\Delta \hat{f}_{int} = \arg_{\Delta \tilde{f}_{int}} \left\{ \max \left( L_4 \left( \Delta \tilde{f}_{int} \right) \Big|_{\Delta \tilde{f}_{int} = f_{+\frac{1}{2}Q}; \Delta \tilde{f}_{int} = f_{-\frac{1}{2}Q}; \Delta \tilde{f}_{int} = 0} \right) \right\}$$

$$= \arg_{\Delta \tilde{f}_{int}} \left\{ \max \left( \mathrm{Re} \left\{ \sum_{v=0}^{N_{Sym}-1} y_{v,comp} \cdot e^{-j \cdot 2\pi \cdot \Delta \tilde{f}_{int} \cdot v \cdot T_a} \right\} \Big|_{\Delta \tilde{f}_{int} = f_{+\frac{1}{2}Q}; \Delta \tilde{f}_{int} = f_{-\frac{1}{2}Q}; \Delta \tilde{f}_{int} = 0} \right) \right\} \tag{64}$$

Für eine effizientere Implementierung z.B. auf einem digitalen Signalprozessor kann durch Vertauschung von Realteilbildung und Summation (64) wie folgt weiter vereinfacht werden:

$$\Delta \hat{f}_{int}$$

$$= \arg_{\Delta \tilde{f}_{int}} \left\{ \max \left( \sum_{v=0}^{N_{Sym}-1} \mathrm{Re}\{y_{v,comp}\} \cdot \cos\left(2\pi \cdot \Delta \tilde{f}_{int} \cdot v \cdot T_a\right) - \mathrm{Im}\{y_{v,comp}\} \cdot \sin\left(2\pi \cdot \Delta \tilde{f}_{int} \cdot v \cdot T_a\right) \Big|_{\substack{\Delta \tilde{f}_{int}=f_{+\frac{1}{2}Q}; \\ \Delta \tilde{f}_{int}=f_{-\frac{1}{2}Q}; \\ \Delta \tilde{f}_{int}=0}} \right) \right\},$$

$$(65)$$

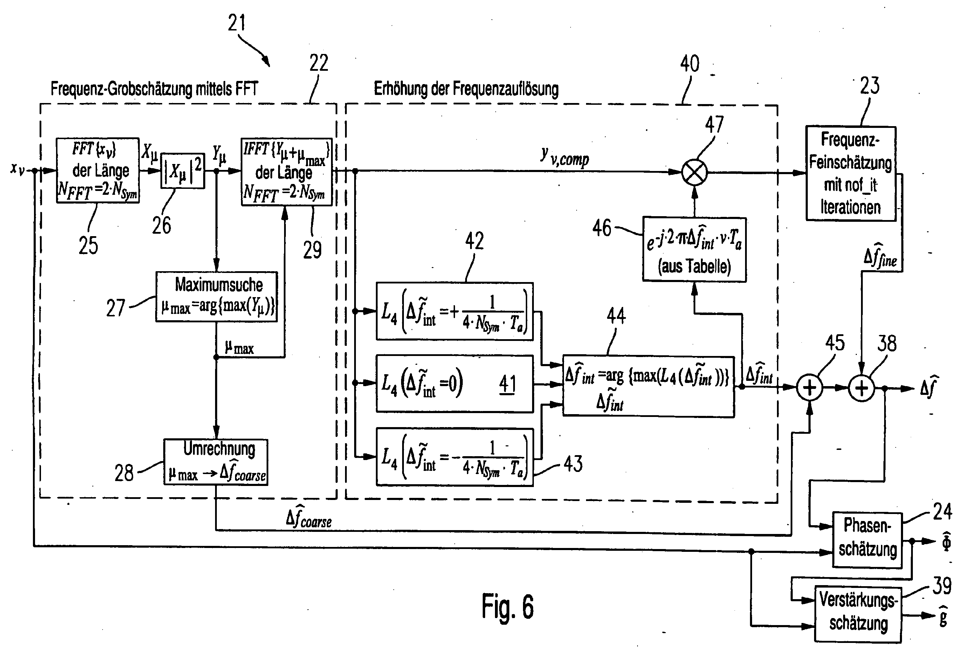

Der gesamte Ablauf des Verfahrens ist schematisch in Fig. 6 zusammengefaßt.

In Fig. 6 ist zunächst der Frequenz-Grobschätzer 22, der Frequenz-Feinschätzer 23 und der Phasenschätzer 24 sowie der Verstärkungs-Schätzer 25 in gleicher Weise wie in Fig. 5 dargestellt. Die diesbezüglichen Elemente sind mit gleichen Bezugszeichen versehen, so daß sich insoweit eine wiederholende Beschreibung erübrigt.

Im Unterschied zu Fig. 5 ist zwischen dem Frequenz-Grobschätzer 22 und dem Frequenz-Feinschätzer 23 zur Erhöhung der Frequenzauflösung der Block 40 eingeschoben. In dem Block 30 wird nicht nur im Block 41 entsprechend Formel (45) die Log-Likelihood-Funktion $L_4$ an der Stelle des Grobschätzwerts berechnet, sondern in den Blöcken 42 und 43 wird die Log-Likelihood-Funktion $L_4$ entsprechend Formel (60) in Verbindung mit Formel (62) bzw. (63) auch eine halbe Schrittweite der Quantisierung $f_Q$ der *FFT* neben dem Grobschätzwert berechnet. In einem Block 44 wird das Maximum dieser drei Alternativen von $L_4$ bestimmt und durch die arg-Funktion daraus der Frequenzbeitrag $\Delta \hat{f}_{int}$ ermittelt, der in dem Addierer 45 zu den Grobschätzwert der Frequenz addiert wird.

Die sich daraus ergebenden Phasenkompensationswerte stehen in dem Block 46 in einer Tabelle zur Verfügung und die Signalfolge $y_{v,comp}$ wird in dem Multiplizierer 47 mit diesem Kompensationswerten multipliziert.

Soweit zur Vorstellung des in der DE 103 09 262 beschriebenen uML-Schätzers.

Die erreichbare Schätzgenauigkeit (Varianz des Schätzfehlers) hängt von der Anzahl der zur Schätzung verwendeten Glieder der Empfangsfolge ab. Mit steigendem $N_{Sym}$ ist eine genauere Schätzung des Frequenz- und Phasenversatzes möglich. Verwendet man den universellen ML-Schätzer aus der DE 103 09 262, so ergibt sich bei großen Beobachtungslängen jedoch folgendes Problem: Für die Frequenzgrobschätzung muß eine FFT großer Länge durchgeführt werden. Dies ist zum einen sehr rechenintensiv und zum anderen wird dabei entsprechend viel Speicherplatz benötigt.

Das im Folgenden vorgestellte, erfindungsgemäße zweistufige Schätzverfahren erreicht bei stark reduziertem Ressourcenbedarf praktisch die gleiche Schätzgenauigkeit wie der universelle ML-Schätzer. Der erfindungsgemäße Maximum-Likelihood-Schätzer für Frequenz und Phase bei großen Beobachtungslängen (abgekürzt long_uML-Schätzer) basiert dabei auf dem universellen ML-Schätzer aus der DE 103 09 262. Jedoch kann beim erfindungsgemäßen long_uML-Verfahren mit Hilfe einer Mittelwertbildung über das grob frequenzkompensierte modulationsbereinigte Empfangssignal die notwendige Schätzlänge erheblich reduziert werden. Ebenso wie der universelle ML-Schätzer der DE 103 09 262 ist der erfindungsgemäße long_uML-Schätzer grundsätzlich für den Data-Aided-Fall konzipiert. Jedoch kann das long_uML-Verfahren auch für den Non-Data-Aided-Fall eingesetzt werden, falls die Modulationsabhängigkeit des verrauschten Empfangssignals durch Anwendung einer Nichtlinearität entfernt wird.

Nachfolgend wird nun der Schätzalgorithmus des long_uML-Schätzers vorgestellt.

Ausgangspunkt des ML-Schätzers bei großen Beobachtungslängen ist wiederum das in Fig. 3 dargestellte Übertragungsmodell. Das zeitdiskrete Empfangssignal *r* wird beim erfindungsgemäßen long_uML-Verfahren zunächst mit der konjugiert komplexen Symbolfolge multipliziert. Dabei entsteht die modulationsbereinigte Empfangsfolge *x'* der Länge $N'_{Sym}$:

$$x'_v = r_v \cdot a_v^{\bullet}$$
$$= (s_v + n_v) \cdot a_v^{\bullet}$$
$$= g \cdot |a_v|^2 \cdot e^{j(2\pi \cdot \Delta f \cdot v \cdot T_a + \phi)} + n_v \cdot a_v^{\bullet} \qquad (66)$$

Von der Folge *x'* werden nun nur die ersten $N_{Sym1}$ Glieder für eine Frequenz-Vorschätzung benutzt ($N_{Sym1} < N'_{Sym}$). In dieser Vorschätzstufe wird vorzugsweise mit Hilfe des universellen ML-Schätzers aus der DE 103 09 262 der Schätzwert $\Delta \hat{f}_{pre}$ ermittelt.

Mit $\Delta\hat{f}_{pre}$ erfolgt anschließend eine grobe Frequenzkompensation aller $N'_{Sym}$ Glieder der modulationsbereinigten Empfangsfolge $x'$ :

$$x_{v,comp} = x'_v \cdot e^{-j \cdot 2 \cdot \pi \cdot \Delta\hat{f}_{pre} \cdot v \cdot T_a}$$
$$= g \cdot |a_v|^2 \cdot e^{j[2 \cdot \pi \cdot (\Delta f' - \Delta\hat{f}_{pre}) \cdot v \cdot T_a + \phi]} + n_v \cdot a_v^* \cdot e^{-j \cdot 2 \cdot \pi \cdot \Delta\hat{f}_{pre} \cdot v \cdot T_a} \qquad (67)$$

Die Grobkompensation des Frequenzversatzes ist notwendig, damit nachfolgend eine Mittelung über jeweils $N_{mean}$ Glieder der Folge $x_{comp}$ durchgeführt werden kann. Eine Mittelung über die unkompensierte Folge $x'$ würde zu großen Amplituden- und Phasenfehlern führen, da die durch den Frequenzversatz $\Delta f'$ verursachte Phasenverschiebung zwischen den Gliedern von $x'$ zu groß wäre. Durch die Kompensation mit dem entsprechend genauen Schätzwert $\Delta\hat{f}_{pre}$ ist jedoch der verbleibende Frequenzversatz

$$\Delta f_{main} = \Delta f' - \Delta\hat{f}_{pre} \qquad (68)$$

der Folge $x_{comp}$ so klein, daß der daraus entstehende Phasenversatz zwischen den Folgengliedern bei einer Mittelung über $N_{mean}$ Glieder vernachlässigt werden kann.

Aus der Mittelwertbildung über jeweils, $N_{mean}$ Glieder der Folge $x_{comp}$ ergibt sich die Folge $x_{mean}$ als

$$x_{\kappa,mean} = \frac{1}{N_{mean}} \cdot \sum_{v=\kappa \cdot N_{mean}}^{(\kappa+1) \cdot N_{mean} - 1} x_{v,comp}$$
$$= \underbrace{\frac{1}{N_{mean}} \cdot \sum_{v=\kappa \cdot N_{mean}}^{(\kappa+1) \cdot N_{mean} - 1} g \cdot |a_v|^2 \cdot e^{j[2 \cdot \pi \cdot (\Delta f' - \Delta\hat{f}_{pre}) \cdot v \cdot T_a + \phi]}}_{s_{\kappa,mean}} + \underbrace{\frac{1}{N_{mean}} \cdot \sum_{v=\kappa \cdot N_{mean}}^{(\kappa+1) \cdot N_{mean} - 1} n_v \cdot a_v^* \cdot e^{-j \cdot 2 \cdot \pi \cdot \Delta\hat{f}_{pre} \cdot v \cdot T_a}}_{n_{\kappa,mean}}$$
$$(69)$$

mit dem Index

$$\kappa = [0, N_{Sym2} - 1] \qquad (70)$$

Die Länge $N_{Sym2}$ der Folge $x_{mean}$ ergibt sich durch die Division

$$N_{Sym2} = \frac{N'_{Sym}}{N_{mean}} \qquad \text{mit} \qquad N_{Sym2} \in \mathbb{N}, \qquad (71)$$

wobei vorzugsweise auf den nächsten ganzzahligen Wert für $N_{Sym2}$ abgerundet wird.

Darüber hinaus ist zu beachten, daß durch die durchgeführte Mittelung der zeitliche Abstand $T_{a2}$ der Folgenglieder von $x_{mean}$ wie folgt mit der Abtastdauer $T_a$ der ursprünglichen Empfangsfolge $r$ zusammenhängt:

$$T_{a2} = N_{mean} \cdot T_a \qquad (72)$$

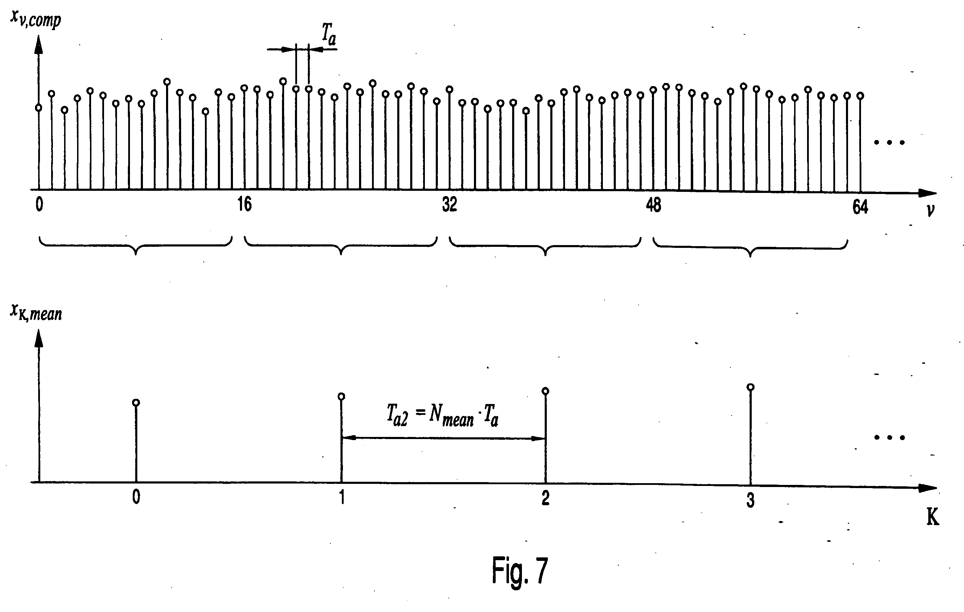

Durch die schematische Darstellung in Fig. 7 wird die durchgeführte Mittelung über jeweils $N_{mean}$ Samples der Folge $x_{comp}$ nochmals verdeutlicht. Die Mittelwertbildung hat keinen Einfluß auf den zu schätzenden Frequenzversatz.

Die Folge $x_{mean}$ hat deshalb den selben Frequenzversatz $\Delta f_{main}$ wie die mit dem Schätzwert der Vorschätzung kompensierte Folge $x_{comp}$.

Die nun durchgeführte Frequenz-Hauptschätzung ermittelt aus der nur $N_{Sym2}$ Glieder langen Folge $x_{mean}$ den, Schätzwert $\Delta \hat{f}_{main}$. Für die Hauptschätzung wird dabei wiederum bevorzugt der universelle ML-Schätzer aus der DE 103 09 262 eingesetzt.

Der Frequenz-Gesamtschätzwert des long_uML-Schätzers ergibt sich durch Addition der Schätzwerte aus Vor- und Hauptschätzung:

$$\Delta \hat{f}' = \Delta \hat{f}_{pre} + \Delta \hat{f}_{main} \qquad (73)$$

Der Schätzwert für die Phase $\phi'$ der modulationsbereinigten Empfangsfolge $x'$ wird schließlich nach der selben Vorschrift wie beim universellen ML-Schätzer berechnet:

$$\hat{\phi}' = \arg\{ \sum_{v=0}^{N_{Sym}-1} x_v \cdot e^{-j \cdot 2 \cdot \pi \cdot \Delta \hat{f}' \cdot v \cdot T_a} \} \qquad (74)$$

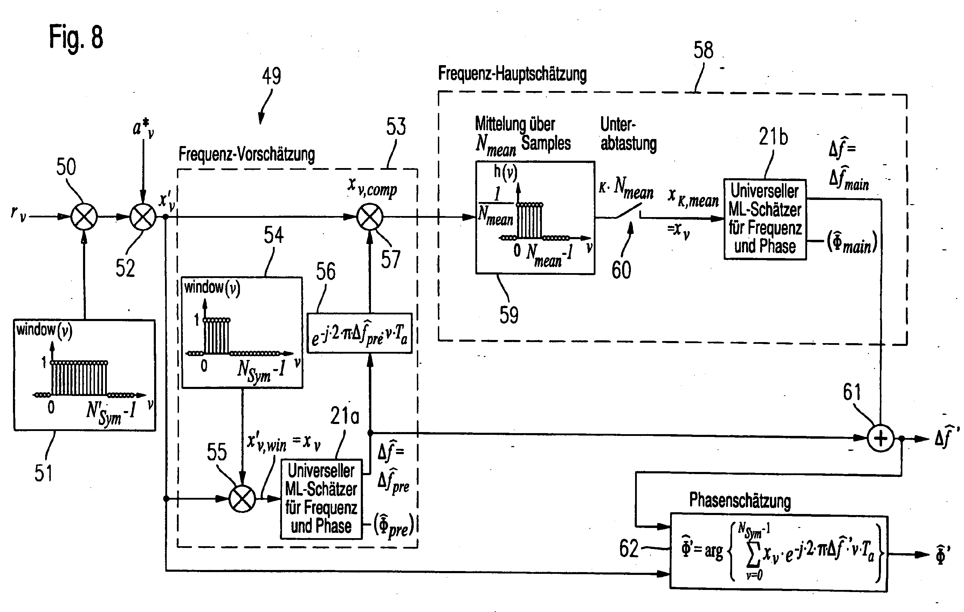

Der vorstehend beschriebene Ablauf der Frequenz- und Phasenschätzung mit dem effizienten ML-Schätzer bei großen Beobachtungslängen ist in Fig. 8 schematisch dargestellt.

Zunächst wird mittels eines Multiplizierers 50 von der komplexen Empfangsfolge $r_v$ ein Fenster der Länge $N'_{Sym}$ ausgewählt. Das Fenster ist in dem Block 51 schematisch dargestellt. In einem Multiplizierer 52 erfolgt zum Zwecke der Modulationsbereinigung eine Multiplikation mit der konjugiert-komplexen zu sendenden Symbolfolge $a_v^*$. Die modulationsbereinigte Empfangsfolge $x'_v$ wird einem Frequenz-Vorschätzer 53 zugeführt. Dort erfolgt zunächst eine Fensterung mit dem Unterfenster der Länge $N_{Sym1}$. Dieses Unterfenster ist durch den Block 54 veranschaulicht. Die Fensterung erfolgt mittels des Multiplizierers 55, wodurch die Signalfolge $x'_{v,win}$ entsteht. Anschließend wird mit einem ersten universellen Maximum-Likelihood-Schätzer (uML-Schätzer) 21, wie er z.B. in der DE 103 09 262 beschrieben und in den Fig. 5 und 6 dargestellt ist, mit der Signalfolge $x'_{v,win}$ ein Vorschätzwert für die Frequenz $\Delta \hat{f}_{pre}$ und ein Vorschätzwert für die Phase $\hat{\Phi}_{pre}$ geschätzt. In Block 56 wird der in Formel (67) benötigte Kompensationsfaktor als komplexer Drehzeiger zur Verfügung gestellt. Die Kompensation entsprechend Formel (67) erfolgt schließlich durch den Multiplizierer 57.

Die Folge $x_{v,comp}$ wird dann dem Frequenz-Hauptschätzer 58 zugeführt. Dort erfolgt in dem Block 59 eine Mittelung über die $N_{mean}$-Werte (Samples). Anschließend erfolgt durch das nur symbolisch dargestellte Schaltelement 60 eine Unterabtastung, um den Faktor $\kappa \cdot N_{mean}$. Die unterabgetastete Folge $x_{\kappa,mean}$ wird dann einem zweiten universellen Maximum-Likelihood-Schätzer 21b zugeführt, der in der DE 103 09 262 beschrieben und in den Fig. 5 und 6 beispielhaft dargestellt ist. Am Ausgang dieses zweiten universellen ML-Schätzers 21b steht dann der Frequenz-Schätzwert $\Delta \hat{f}_{main}$ sowie der PhasenSchätzwert $\hat{\Phi}_{main}$ zur Verfügung. Der Frequenz-Schätzwert $\Delta \hat{f}_{main}$ wird dem Addierer 61 zugeführt, der diesen Frequenz-Schätzwert $\Delta \hat{f}_{main}$ mit dem Vor-Frequenzschätzwert $\Delta \hat{f}_{pre}$ zu dem Gesamt-Frequenzschätzwert $\Delta \hat{f}$ addiert.

Die Berechnung des Gesamt-Phasenschätzwerts $\hat{\Phi}'$ erfolgt auf der Grundlage der Formel (74) in dem Block 62. Dazu wird dem Block 62 die modulationskompensierte Folge $x'_v$ und der Gesamt-Frequenzschätzwert $\Delta \hat{f}$ zugeführt.

Es läßt sich zeigen, daß bei entsprechender praxisgerechter Einstellung der Parameter $N_{Sym1}$ und $N_{mean}$ die Verschlechterung der Schätzgenauigkeit der Frequenzschätzung gegenüber der theoretischen Cramér-Rao-Grenze vernachlässigbar klein ist. Für Symbolalphabete mit konstanten Symbolbeträgen kann die Frequenzschätzung des erfindungsgemäßen long_uML-Schätzers somit als äußerst effizient bezeichnet werden.

Nachfolgend wird noch auf die Möglichkeit eingegangen, die Hauptschätzung des erfindungsgemäßen long_ uML-Schätzers in mehreren Iterationen durchzuführen. Eine iterative Hauptschätzung hätte die nachfolgend aufgeführten Vprteile:

Es läßt sich zeigen, daß sich durch den Restfrequenzversatz der Folge $x_{comp}$ in Zusammenhang mit der Mittelwertbildung die Schätzgenauigkeit des long_uML-Schätzers gegenüber einer effizienten Schätzung um den Faktor $SNR_{Verlust}$, der den Anstieg der Varianz des Schätzfehlers gegenüber der effizienten Schätzung beschreibt, verschlechtert. Bei einer iterativen Anwendung des Algorithmus der Hauptschätzung würde sich dieser Restfrequenzversatz und damit auch der Faktor $SNR_{Verlust}$ mit jeder Iteration verkleinern, d.h. die Schätzgenauigkeit des erfindungsgemäßen long_uML-Schätzers würde steigen.

Darüber hinaus könnte die Mittelungslänge $N_{mean}$ verlängert werden, wodurch sich die Schätzlänge $N_{Sym2}$ und damit auch die FFT-Länge $N_{FFT2}$ des uML-Schätzers 21b der Hauptschätzung entsprechend reduzieren würde. Die durch eine größere Mittelungslänge verursachte Verschlechterung der Schätzgenauigkeit müßte durch zusätzliche Iterationen ausgeglichen werden. Trotz dieser zusätzlichen Iterationen ist jedoch zu erwarten, daß sich der Rechenaufwand bei einer Verlängerung von $N_{mean}$ insgesamt reduziert, da der Rechenaufwand für die FFT des uML-Schätzers stärker als linear von $N_{FFT2}$ abhängt.

Es soll daher im Folgenden auf das Grundprinzip der iterativen Hauptschätzung eingegangen werden. Ausgangspunkt ist dabei die vorstehende Beschreibung des long_uML-Schätzalgorithmus und das zugehörige Blockschaltbild in Fig. 8.

Es sei zunächst festgehalten, daß bei der in *nof_it_main* Iterationen durchgeführten Hauptschätzung mit Hilfe des uML-Schätzers 21b der Hauptschätzstufe in der it-ten Iteration der Schätzwert $\Delta\hat{f}_{main}^{\{it\}}$ für den noch verbleibenden Restfrequenzversatz ermittelt wird.

Für die nächste durchzuführende Iteration wird nun die Folge $x_{comp}$ aus (67), welche am Ausgang der Vorschätzung vorliegt, mit der Summe

$$\Delta\hat{f}_{main\_total} = \sum_{\alpha=1}^{it} \Delta\hat{f}_{main}^{\{\alpha\}} \qquad (75)$$

der Frequenzschätzwerte aller bisherigen Iterationen kompensiert. Es gilt dabei:

$$x_{\nu,comp}^{\{it+1\}} = x_{\nu,comp} \cdot e^{-j\cdot 2\pi\cdot\Delta\hat{f}_{main\_total}\cdot\nu\cdot T_a} \qquad (76)$$

Dadurch verkleinert sich der in der Iteration $\{it+1\}$ von der Hauptschätzung zu schätzende Frequenzversatz $\Delta f_{main}^{\{it+1\}}$ auf:

$$\Delta f_{main}^{\{it+1\}} = \Delta f' - \Delta\hat{f}_{pre} - \Delta\hat{f}_{main\_total} \qquad (77)$$

Für die erste durchzuführende Iteration gilt dabei $\Delta\hat{f}_{main\_total}=0$, d.h. es wird die ursprüngliche, am Ausgang der Vorschätzung vorliegende Folge $x_{comp}$ verwendet:

$$x_{\nu,comp}^{\{1\}} = x_{\nu,comp} \qquad (78)$$

Aus den mit (76) berechneten Folgengliedern $x_{\nu,comp}^{\{it+1\}}$ entsteht durch die nachfolgende Mittelwertbildung analog zu (69) die Folge

$$x_{\kappa,mean}^{\{it+1\}} = \frac{1}{N_{mean}} \cdot \sum_{\nu=\kappa\cdot N_{mean}}^{(\kappa+1)\cdot N_{mean}-1} x_{\nu,comp}^{\{it+1\}} \qquad (79)$$

Der uML-Schätzer 21b der Hauptschätzung kann anschließend aus den berechneten Folgengliedern $x_{\kappa,mean}^{\{it+1\}}$ den nächsten Frequenzschätzwert $\Delta\hat{f}_{main}^{\{it+1\}}$ ermitteln.

Durch Wiederholung der obigen Schritte steht schließlich nach *nof_it_main* Iterationen die endgültige Sum-

me $\Delta \hat{f}_{main\_total}\Big|_{it\,=\,nof\_it\_main}$ aller Einzelschätzwerte der Hauptschätzung zur Verfügung, die zusammen mit dem Schätzwert $\Delta \hat{f}_{pre}$ der Vorschätzung den Gesamtschätzwert der Frequenzschätzung des long_uML-Schätzers ergibt:

$$\Delta \hat{f}' \;=\; \Delta \hat{f}_{pre} \;+\; \Delta \hat{f}_{main\_total}\Big|_{it\,=\,nof\_it\_main} \tag{80}$$

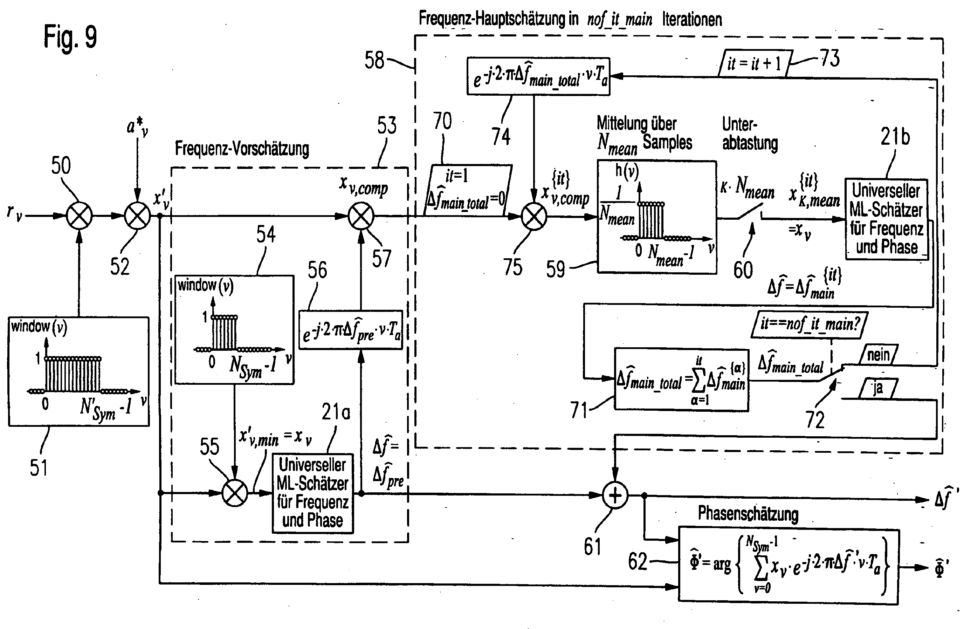

Der vorstehend beschriebene Ablauf wird in Fig. 9 graphisch veranschaulicht. Bereits anhand von Fig. 8 beschriebene Elemente sind mit übereinstimmenden Bezugzeichen versehen, so daß sich insoweit eine wiederholende Beschreibung erübrigt.

In einem Block 70 des Frequenz-Hauptschätzers 58 wird zunächst der Iterationszähler *it* auf 1 und der gesamte Frequenz-Schätzwert $\Delta \hat{f}_{main\_total}$ auf 0 gesetzt. Der universelle ML-Schätzer 21b berechnet den Frequenz-Schätzwert $\Delta \hat{f}^{\{it\}}_{main}$ der ersten Iterationsschleife *it*=1 bzw. für spätere Iterationsschleifen *it*>1 den jeweiligen Beitrag dieser Iterationsschleife $\Delta \hat{f}^{\{it\}}_{main}$, welcher in einem Block 71 zum Frequenz-Gesamtschätzwert $\Delta \hat{f}_{main\_total}$ aufaddiert wird. Solange das Ende der Iteration noch nicht erreicht ist, also solange der Iterationszähler *it* kleiner als ein vorgegebener Maximalwert *nof_it_main* ist, wird über den symbolisch dargestellten Schalter 72 die Iteration fortgesetzt, indem in dem Block 73 der Iterationszähler inkrementiert wird und in einem Block 74 der in Formel (76) benötigte Kompensationsfaktor berechnet wird. Die Kompensation entsprechend Formel (76) erfolgt dann mittels des Multiplizierers 75.

Wenn das Ende der Iteration erreicht ist, also gilt *it=nof_it_main,* wird über den Schalter 72 der endgültige Frequenz-Gesamtschätzwert der Frequenz-Hauptschätzung dem Addierer 61 zugeführt und die weitere Vorgehensweise erfolgt wie anhand von Fig. 8 beschrieben.

Abschließend sei noch auf eine Möglichkeit zur Modifikation des vorstehend beschriebenen Verfahrens hingewiesen. Der in (76) zur Kompensation verwendete Wert $\Delta \hat{f}_{main\_total}$ stellt einen Schätzwert für den nach der Vorschätzung verbleibenden Frequenzversatz $\Delta f_{main}$ der Folge $x_{comp}$ dar. Bei entsprechender Wahl der Schätzlänge $N_{Sym1}$ der Vorschätzung ist $\Delta f_{main}$ und damit auch $\Delta f_{main\_total}$ so klein, daß die Exponentialfunktion in (76) mit Hilfe der Näherung (47) linearisiert werden darf. Es ergibt sich dadurch die Berechnungsvorschrift '

$$x^{\{it+1\}}_{v,comp} \;=\; x_{v,comp} \cdot \left(1 \;-\; j \cdot 2\pi \cdot \Delta \hat{f}_{main\_total} \cdot v \cdot T_a \right), \tag{81}$$

die anstelle von (76) für die in jeder Iteration durchgeführte Frequenzkompensation verwendet werden kann. Es reduziert sich der Rechenaufwand erheblich, wenn statt der in (76) vorgenommenen rechenintensiven Multiplikation mit einer Exponentialfunktion die wesentlich einfachere Kompensationsvorschrift (81) eingesetzt wird.

**Patentansprüche**

**1.** Verfahren zum Schätzen der Frequenz ($\Delta f'$) und/oder der Phase ($\Phi'$) einer digitalen Eingangs-Signalfolge ($x'_v$) mit der Gesamt-Länge $N'_{Sym}$ mit folgenden Verfahrensschritten:

- Durchführen einer Frequenz-Vorschätzung (53) zur Ermittlung eines Frequenz-Vorschätzwerts ($\Delta \hat{f}_{pre}$) mit einer ersten Maximum-Likelihood-Schätzung (21a) unter Verwendung eines Ausschnitts ($x'_{v,win}$) der Teil-Länge $N_{sym1}$ aus der digitalen Eingangs-Signalfolge ($x'_v$), wobei die Teil-Länge $N_{sym1}$ kleiner ist als die Gesamt-Länge $N'_{Sym}$,
- Durchführen einer Frequenz-Kompensation der digitalen Eingangs-Signalfolge ($x'_v$) mit dem Frequenz-Vorschätzwert ($\Delta \hat{f}_{pre}$) zur Erzeugung einer frequenzkompensierten Signalfolge ($x_{v,comp}$),
- Durchführen einer Frequenz-Hauptschätzung (58) zur Ermittlung eines Frequenz-Hauptschätzwerts ($\Delta \hat{f}_{main}$) mit einer zweiten Maximum-Likelihood-Schätzung (21b) unter Verwendung der frequenzkompensierten Signalfolge ($x_{v,comp}$) und
- Addieren des Frequenz-Vorschätzwerts ($\Delta \hat{f}_{pre}$) und des Frequenz-Hauptschätzwerts ($\Delta \hat{f}_{main}$) zu einem Ge-

samtschätzwert ($\Delta \hat{f}$) der Frequenz.

2. Verfahren nach Anspruch 1,
   **dadurch gekennzeichnet,**
   **daß** die Frequenz-Kompensation gemäß

$$x_{\nu,comp} = x'_{\nu} \cdot e^{-j \cdot 2 \cdot \pi \cdot \Delta \hat{f}_{pre} \cdot \nu \cdot T_a}$$

erfolgt, wobei

$x'_{\nu}$ die Eingangs Signalfolge,
$x_{\nu,comp}$ die frequenzkompensierte Signalfolge,
$\Delta f_{pre}$ den Frequenz-Vorschätzwert
$T_a$ die Abtastperiode der digitalen Eingangs-Signalfolge $x'_{\nu}$ und
$\nu$ den Symbolindex der Signalfolgen

bedeuten.

3. Verfahren nach Anspruch 2,
   **dadurch gekennzeichnet,**
   **daß** aus dem Gesamtschätzwert $\Delta \hat{f}$ der Frequenz ein Schätzwert der Phase gemäß

$$\hat{\phi}' = \arg\left\{ \sum_{\nu=0}^{N_{Sym}-1} x'_{\nu} \cdot e^{-j \cdot \Delta \hat{\omega} \cdot \nu \cdot T_a} \right\}$$

berechnet wird, wobei
$\Delta \hat{\omega}$ das $2\pi$-fache des Gesamtschätzwerts $\Delta \hat{f}$ der Frequenz bedeutet.

4. Verfahren nach einem der Ansprüche 1 bis 3,
   **dadurch gekennzeichnet,**
   **daß** vor der zweiten Maximum-Likelihood-Schätzung (21b) eine Mittelung über $N_{mean}$ Abtastwerte der frequenz-kompensierten Signalfolge ($x_{\nu,comp}$) und eine anschließende Unterabtastung mit einem Unterabtastfaktor $\kappa \cdot N_{mean}$, der gleich oder ein Vielfaches von $N_{mean}$ ist, erfolgt.

5. Verfahren nach einem der Ansprüche 1 bis 4,
   **dadurch gekennzeichnet,**
   **daß** die Berechnung des Frequenz-Hauptschätzwerts ($\Delta \hat{f}_{main}$) iterativ wiederholt wird.

6. Verfahren nach Anspruch 5,
   **dadurch gekennzeichnet,**

   **daß** in sukzessiven Iterationstufen Hauptschätzwert-Iterationsbeiträge $\Delta \hat{f}_{main}^{\{it\}}$ erzeugt werden,

   **daß** die Hauptschätzwert-Iterationsbeiträge $\Delta \hat{f}_{main}^{\{it\}}$ der bereits durchgeführten Iterationsstufen gemäß

$$\Delta \hat{f}_{main\_total} = \sum_{\alpha=1}^{it} \Delta \hat{f}_{main}^{\{\alpha\}}$$

aufaddiert werden, wobei it den Iterationsindex der it-ten Iterationsstufe bedeutet, und
**daß** die frequenzkompensierte Signalfolge $x_{\nu,comp}$ zusätzlich gemäß

$$x^{\{it+1\}}_{\nu,comp} \;=\; x_{\nu,comp} \cdot e^{-j \cdot 2\,\pi \cdot \Delta \hat{f}_{main\_total} \cdot \nu \cdot T_a}$$

zur Erzeugung einer frequenzkompensierten Iterations-Signalfolge $x^{\{it+1\}}_{\nu,comp}$ kompensiert wird, und die nächste Iterationsstufe mit der frequenzkompensierten Iterations-Signalfolge $x^{\{it+1\}}_{\nu,comp}$ durchgeführt wird.

**7.** Verfahren nach einem der Ansprüche 1 bis 6,
**dadurch gekennzeichnet,**
**daß** bei beiden Maximum-Likelihood-Schätzungen (21a, 21b) eine Frequenz-Grobschätzung (22) unter Verwendung einer diskreten Fourier-Transformation und anschließend eine Frequenz-Feinschätzung (23) mittels Interpolation durchgeführt wird.

**8.** Verfahren nach Anspruch 7,
**dadurch gekennzeichnet,**
**daß** bei der Frequenz-Grobschätzung (22) zur Erzeugung eines Grobschätzwerts ($\Delta \hat{f}_{coarse}$) der Frequenz eine diskrete Fourier-Transformation (25) der Eingangs-Signalfolge ($x_\nu = x'_{\nu,min}$ ; $x_\nu = x_{\kappa,mean}$) für die Maximum-Likelihood-Schätzung (21a; 21b) zur Erzeugung einer Fourierfolge ($X_\mu$), eine Betragsbildung (26) der Fourierfolge ($X_\mu$) und eine Bestimmung des Maximums des Betrags ($|X_\mu|$) oder einer Funktion ($|X_\mu|^2$) des Betrags der Fourierfolge erfolgt.

**9.** Verfahren nach Anspruch 8,
**dadurch gekennzeichnet,**
**daß** der Grobschätzwert $\Delta \hat{f}_{coarse}$ der Frequenz aus dem Maximum des Betrags ($|X_\mu|$) oder einer Funktion ($|X_\mu|^2$) des Betrags der Fourierfolge gemäß

$$\Delta \hat{f}_{coarse} \;=\; \begin{cases} \mu_{\max} \cdot f_Q & \text{für } \mu_{\max} \le N_{FFT}/2 \\ (\mu_{\max} - N_{FFT}) \cdot f_Q & \text{für } \mu_{\max} > N_{FFT}/2 \end{cases}$$

berechnet wird,
wobei

$f_Q$ die Quantisierung des diskreten Fourier-Transformation im Frequenzbereich,
$N_{FFT}$ die Länge der Fourierfolge ($X_\mu$) und
$\mu_{\max}$ der Index des diskreten Werts der Fourierfolge, bei welchem das Maximum des Betrags ($|X_\mu|$) bzw. der Funktion ($|X_\mu|^2$) des Betrags der Fourierfolge ($X_\mu$) vorliegt,

bedeuten.

**10.** Verfahren nach Anspruch 8 oder 9,
**dadurch gekennzeichnet,**
**daß** die Fourierfolge ($X_\mu$), der Betrag ($|X_\mu|$) oder eine Funktion ($|X_\mu|^2$) des Betrags der Fourierfolge entsprechend dem Index ($\mu_{\max}$), bei welchem das Maximum des Betrags ($|X_\mu|$) oder der Funktion ($|X_\mu|^2$) des Betrags der Fourierfolge ($X_\mu$) vorliegt, verschoben wird, und dann zur Erzeugung einer rücktransformierten Signalfolge ($y_\nu$) eine inverse diskrete Fourier-Transformation (29) durchgeführt wird und die rücktransformierten Signalfolge ($y_\nu$) mit dem Grobschätzwert ($\Delta \hat{f}_{coarse}$) zur Erzeugung einer kompensierten, rücktransformierten Signalfolge ($y_{\nu,comp}$) kompensiert wird.

**11.** Verfahren nach Anspruch 10,
**dadurch gekennzeichnet,**
**daß** die Kompensation gemäß

$$y_{\nu,comp} = y_{\nu} \cdot e^{-j \cdot 2\pi \cdot \Delta\hat{f}_{coarse} \cdot \nu \cdot T_a}$$

erfolgt, wobei

$y_{\nu}$ die rücktransformierten Signalfolge,
$y_{\nu,comp}$ die kompensierten, rücktransformierten Signalfolge,
$\Delta f_{coarse}$ den Grobschätzwert der Frequenz,
$T_a$ die Abtastperiode der digitalen Eingangs-Signalfolge ($x_{\nu} = x'_{\nu,win}$ ; $x_{\nu} = x_{\kappa,mean}$) und
$\nu$ den Symbolindex der rücktransformierten Signalfolge

bedeuten.

**12.** Verfahren nach Anspruch 11,
**dadurch gekennzeichnet,**
**daß** zur Erhöhung der Frequenzauflösung nach der inversen diskreten Fourier-Transformation (29) die Berechnung einer Log-Likelihood-Funktion ($L_4$) an der Abweichung Null ($\Delta\tilde{f}_{int} = 0$) von dem Grobschätzwert ($\Delta\tilde{f}_{coarse}$) der Frequenz als auch an einer Abweichung $\left( \Delta\tilde{f}_{int} = \pm 1 / \left( 4 \cdot N_{sym} \cdot T_a \right) \right)$ von dem Grobschätzwert ($\Delta\hat{f}_{coarse}$), die der Hälfte der Quantisierung ($f_Q$) der diskreten Fourier-Transformation entspricht, erfolgt und

**daß** zu dem Grobschätzwert ($\Delta\hat{f}_{coarse}$) der Frequenz ein Zusatzwert ($\Delta\tilde{f}_{int}$) addiert wird, welcher der Abweichung ($\Delta\tilde{f}_{int}$) von dem Grobschätzwert ($\Delta\tilde{f}_{coarse}$) der Frequenz entspricht, an welcher die Log-Likelihood-Funktion ($L_4$) ihr

Maximum $\left( \max\left\{ L_4\left( \Delta\tilde{f}_{int} \right) \right\} \right)$ hat.

**13.** Verfahren nach Anspruch 11 oder 12,
**dadurch gekennzeichnet,**
**daß** ein Feinschätzwert $\Delta\hat{f}_{fine}$ der Frequenz gemäß

$$\Delta\hat{f}_{fine} = \frac{1}{2\pi \cdot T_a} \cdot \frac{\mathrm{Im}\left\{ \sum_{\nu=0}^{N_{Sym}-1} \nu \cdot y_{\nu,comp} \right\}}{\mathrm{Re}\left\{ \sum_{\nu=0}^{N_{Sym}-1} \nu^2 \cdot y_{\nu,comp} \right\}}$$

berechnet wird, wobei

$N_{Sym}$ die Länge der Eingangs-Signalfolge ($x_{\nu}=x'_{\nu,win}$ ; $x_{\nu}=x_{\kappa,mean}$) der Maximum-Likelihood-Schätzung

bedeutet.

**14.** Verfahren nach Anspruch 13,
**dadurch gekennzeichnet,**
**daß** die Berechnung des Feinschätzwerts ($\Delta\hat{f}_{fine}$) der Frequenz iterativ wiederholt wird.

**15.** Verfahren nach Anspruch 14,
**dadurch gekennzeichnet,**
**daß** in sukzessiven Iterationsstufen Feinschätzwert-Iterationsbeiträge gemäß

$$\Delta \hat{f}^{\{it\}}_{fine} = \frac{1}{2\pi \cdot T_a} \cdot \frac{\mathrm{Im}\left\{ \sum_{\nu=0}^{N_{Sym}-1} \nu \cdot y^{\{it\}}_{\nu,comp} \right\}}{\mathrm{Re}\left\{ \sum_{\nu=0}^{N_{Sym}-1} \nu^2 \cdot y^{\{it\}}_{\nu,comp} \right\}}$$

erzeugt werden, wobei it den Iterationsindex it-ten Iterationsstufe bedeutet,
**daß** die Feinschätzwert-Iterationsbeiträge der bereits durchgeführten Iterationsstufen gemäß

$$\Delta \hat{f}_{fine\_total} = \sum_{\alpha=1}^{it} \Delta \hat{f}^{\{it\}}_{fine}$$

aufaddiert werden und
**daß** die rücktransformierte, kompensierte Signalfolge $y_{\nu,comp}$ zusätzlich gemäß

$$y^{\{it\}}_{\nu,comp} = y_{\nu,comp} \cdot e^{-j \cdot 2\pi \cdot \Delta \hat{f}_{fine\_total} \cdot \nu \cdot T_a}$$

zur Erzeugung einer kompensierten Iterations-Signalfolge $y^{\{it\}}_{\nu,comp}$ kompensiert wird, und die nächste Iterationsstufe mit der kompensierten Iterations-Signalfolge durchgeführt wird.

16. Verfahren nach einem der Ansprüche 13 bis 15,
**dadurch gekennzeichnet,**
**daß** der Feinschätzwert ($\Delta \hat{f}_{fine}$) der Frequenz und der Grobschätzwert ($\Delta \hat{f}_{coarse}$) der Frequenz zur Erzeugung eines Gesamtschätzwerts ($\Delta \hat{f} = \Delta \hat{f}_{pre}; \Delta fn = \Delta \hat{f}_{main}$) der Maximum-Likelihood-Schätzung (21a, 21b) addiert werden.

17. Vorrichtung (49) zum Schätzen der Frequenz ($\Delta f$') und/oder der Phase ($\Phi$') einer digitalen Eingangs-Signalfolge ($x'_\nu$) mit der Gesamtlänge N'$_{Sym}$, insbesondere mit den Verfahrensschritten der Verfahren nach einem der Ansprüche 1 bis 16, mit

- einem Frequenz-Vorschätzer (53) zur Ermittlung eines Frequenz-Vorschätzwerts ($\Delta \hat{f}_{pre}$) mit einem ersten Maximum-Likelihood-Schätzer (21a) unter Verwendung eines Ausschnitts der Teil-Länge N$_{sym1}$ aus der digitalen Eingangs-Signalfolge ($x'_\nu$), wobei die Teil-Länge N$_{sym1}$ kleiner ist als die Gesamt-Länge N'$_{Sym}$, wobei der Frequenz-Vorschätzer (53) einen Frequenz-Kompensator (56,57) zur Frequenz-Kompensation der digitalen Eingangs-Signalfolge ($x'_\nu$) mit dem Frequenz-Vorschätzwert ($\Delta \hat{f}_{pre}$) zur Erzeugung einer frequenzkompensierten Signalfolge ($x_{\nu,comp}$) ausweist,
- einem Frequenz-Hauptschätzer (58) zur Ermittlung eines Frequenz-Hauptschätzwerts ($\Delta \hat{f}_{main}$) mit einem zweiten Maximum-Likelihood-Schätzer (21b) unter Verwendung der frequenzkompensierten Signalfolge ($x_{\nu,comp}$) und
- einem Addierer (61) zum Addieren des Frequenz-Vorschätzwerts ($\Delta \hat{f}_{pre}$) und des Frequenz-Hauptschätzwerts ($\Delta \hat{f}_{main}$) zu einem Gesamtschätzwert ($\Delta \hat{f}$) der Frequenz.

18. Digitales Speichermedium mit elektronisch auslesbaren Steuersignalen, die so mit einem programmierbaren Computer oder digitalen Signalprozessor zusammenwirken können, daß das Verfahren nach einem der Ansprüche 1 bis 16 ausgeführt wird.

19. Computerprogramm mit Programmcode-Mitteln, um alle Schritte gemäß einem der Ansprüche 1 bis 16 durchführen zu können, wenn das Pogramm auf einem maschinenlesbaren Datenträger gespeichert ist.

**Claims**

1. Method for estimating the frequency ($\Delta f'$) and/or the phase ($\Phi'$) of a digital input-signal sequence ($x'_\nu$) of total length **N'$_{Sym}$** comprising the following procedural stages:

   - implementation of a frequency pre-estimation (53) in order to determine a pre-estimated frequency value ($\Delta \hat{f}_{pre}$) with a first maximum-likelihood estimation (21a) using a window ($x'_{\nu,win}$) of the partial length **N$_{sym1}$** from the digital input-signal sequence ($x'_\nu$), wherein the partial length (**N$_{sym1}$**) is shorter than the total length **N'$_{Sym}$**;
   - implementation of a frequency compensation of the digital input-signal sequence ($x'_\nu$) with the pre-estimated frequency value ($\Delta \hat{f}_{pre}$) in order to generate a frequency-compensated signal sequence ($x_{\nu,comp}$) ;
   - implementation of a main frequency estimation **(58)** in order to determine a main estimated frequency value ($\Delta \hat{f}_{main}$) with a second maximum-likelihood estimation (21b) using the frequency-compensated signal sequence ($x_{\nu,comp}$); and
   - addition of the pre-estimated frequency value ($\Delta \hat{f}_{pre}$) and the main estimated frequency value ($\Delta \hat{f}_{main}$) to form a total estimated frequency value ($\Delta \hat{f}$).

2. Method according to claim 1,
   **characterised in that**
   the frequency compensation is implemented according to the equation:

$$x_{\nu,comp} = x'_\nu \cdot e^{-j \cdot 2 \cdot \pi \cdot \Delta \hat{f}_{pre} \cdot \nu \cdot T_a}$$

   where

   $x'_\nu$ denotes the input-signal sequence
   $x_{\nu,comp}$ denotes the frequency-compensated signal sequence,
   $\Delta f_{pre}$ denotes the pre-estimated frequency value,
   $T_a$ denotes the sampling period of the digital input-signal sequence $x'_\nu$ and
   $\nu$ denotes the symbol index of the signal sequences.

3. Method according to claim 2,
   **characterised in that**
   an estimated-phase value is calculated from the total estimated-frequency value $\Delta \hat{f}$ according to the equation:

$$\hat{\phi}' = \arg\left\{ \sum_{\nu=0}^{N_{Sym}-1} x'_\nu \cdot e^{-j \cdot \Delta \hat{\omega} \cdot \nu \cdot T_a} \right\}$$

   where

   $\Delta \hat{\omega}$ denotes the $2\pi$-fold of the total estimated-frequency value $\Delta \hat{f}$.

4. Method according to any one of claims 1 to 3,
   **characterised in that**,
   before the second maximum-likelihood estimation (21b), an averaging is implemented over **N$_{mean}$** sampling values of the frequency-compensated signal sequence ($x_{\nu,comp}$), and a subsequent under-sampling is implemented with an under-sampling factor $\kappa \cdot N_{mean}$, which is equal to or a multiple of **N$_{mean}$**.

5. Method according to any one of claims 1 to 4,
   **characterised in that**
   the calculation of the main estimated-frequency value ($\Delta \hat{f}_{main}$) is repeated in an iterative manner.

6. Method according to claim 5,
   **characterised in that**

main estimation-value iterative contributions $\Delta\hat{f}_{main}^{\{it\}}$ are generated in successive iterative stages, that the main estimation-value iterative contributions $\Delta\hat{f}_{main}^{\{it\}}$ of the already-implemented iterative stages are added according to the equation:

$$\Delta\hat{f}_{main\_total} = \sum_{\alpha=1}^{it} \Delta\hat{f}_{main}^{\{\alpha\}}$$

where

it denotes the iteration index of the $it^{th}$ iterative stage,

and that the frequency-compensated signal sequence ($x_{v,comp}$) is additionally compensated according to:

$$x_{v,comp}^{\{it+1\}} = x_{v,comp} \cdot e^{-j\cdot 2\pi\cdot\Delta\hat{f}_{main\_total}\cdot v\cdot T_a}$$

in order to generate a frequency-compensated, iterative signal sequence $x_{v,comp}^{\{it+1\}}$, and the next iterative stage is implemented with the frequency-compensated iterative signal sequence $x_{v,comp}^{\{it+1\}}$.

7. Method according to any one of claims 1 to 6,
   **characterised in that**,
   in the case of the two maximum-likelihood estimations (21a, 21b), a coarse frequency estimation (22) is implemented using a discrete Fourier transform, and following this, a fine frequency estimation (23) is implemented by means of interpolation.

8. Method according to claim 7,
   **characterised in that**,
   in the case of the coarse frequency estimation (22), in order to generate a coarse estimated-frequency value ($\Delta\hat{f}_{coarse}$), a discrete Fourier transform (25) of the input-signal sequence ($x_v = x'_{v,win}$ ; $x_v = x_{\kappa,mean}$) for the maximum-likelihood estimation (21a, 21b) is implemented in order to generate a Fourier sequence ($X_\mu$) ; a modulus formation (26) of the Fourier sequence ($X_\mu$) is implemented; and a determination of the maximum of the modulus ($|X_\mu|$) or a function ($|X_\mu|^2$) of the modulus of the Fourier sequence is implemented.

9. Method according to claim 8,
   **characterised in that**
   the coarse estimated-frequency value ($\Delta\hat{f}_{coarse}$) is calculated from the maximum of the modulus ($|X_\mu|$) or a function ($|X\mu|^2$) of the modulus of the Fourier sequence according to:

$$\Delta\hat{f}_{coarse} = \begin{cases} \mu_{max} \cdot f_Q & \text{for } \mu_{max} \leq N_{FFT}/2 \\ (\mu_{max} - N_{FFT}) \cdot f_Q & \text{for } \mu_{max} > N_{FFT}/2 \end{cases}$$

where

$f_Q$ denotes the quantisation of the discrete Fourier transform in the frequency domain,
$N_{FFT}$ denotes the length of the Fourier sequence ($X_\mu$) and
$\mu_{max}$ denotes the index of the discrete value of the Fourier sequence, at which the maximum of the modulus

($|X_\mu|$) or respectively of the function ($|X_\mu|^2$) of the modulus of the Fourier sequence ($X_\mu$) is present.

**10.** Method according to claim 8 or 9,
**characterised in that**
the Fourier sequence ($X_\mu$), the modulus ($|X_\mu|$) or a function ($|X_\mu|^2$) of the modulus of the Fourier sequence corresponding to the index $\mu_{max}$, at which the maximum of the modulus ($|X_\mu|$) or the function ($|X_\mu|^2$) of the modulus of the Fourier sequence ($X_\mu$) is present, is displaced, and then, in order to generate an inversely-transformed signal sequence ($y_\nu$), an inverse, discrete Fourier transform (29) is implemented, and the inversely-transformed signal sequence ($y_\nu$) is compensated with the coarse estimated value ($\Delta\hat{f}_{coarse}$) in order to generate a compensated, inversely-transformed signal sequence ($y_{\nu,comp}$).

**11.** Method according to claim 10,
**characterised in that**
the compensation is implemented according to:

$$y_{\nu,comp} = y_\nu \cdot e^{-j \cdot 2\pi \cdot \Delta\hat{f}_{coarse} \cdot \nu \cdot T_a}$$

where

$y_\nu$ denotes the inversely-transformed signal sequence,
$y_{\nu,comp}$ denotes the compensated inversely-transformed signal sequence,
$\Delta f_{coarse}$ denotes the coarse estimated-frequency value,
$T_a$ denotes the sampling period of the digital input-signal sequence ($x_\nu = x'_{\nu,win}$ ; $x_\nu = x_{\kappa,mean}$) and
$\nu$ denotes the symbol index of the inversely-transformed signal sequence.

**12.** Method according to claim 11,
**characterised in that**,
in order to increase the frequency resolution after the inverse discrete Fourier transform (29), a log-likelihood function ($L_4$) is calculated at the deviation zero ($\Delta\tilde{f}_{int} = 0$) from the coarse estimated-frequency value ($\Delta\hat{f}_{coarse}$) and also at

a deviation $\left( \Delta\tilde{f}_{int} = \pm 1/\left(4 \cdot N_{sym} \cdot T_a\right) \right)$ from the coarse estimated value ($\Delta\hat{f}_{coarse}$), which corresponds to half of the quantisation ($f_Q$) of the discrete Fourier transform, and
that an additional value ($\Delta\tilde{f}_{int}$), which corresponds to the deviation ($\Delta\tilde{f}_{int}$) from the coarse estimated-frequency value

($\Delta\hat{f}_{coarse}$), at which the log-likelihood function ($L_4$) has its maximum $\left( \max\left\{L_4\left(\Delta\tilde{f}_{int}\right)\right\} \right)$, is added to the coarse

estimated-frequency value ($\Delta\hat{f}_{coarse}$).

**13.** Method according to claim 11 or 12,
**characterised in that**
a fine estimated-frequency value $\Delta\hat{f}_{fine}$ is calculated according to:

$$\Delta\hat{f}_{fine} = \frac{1}{2\pi \cdot T_a} \cdot \frac{\mathrm{Im}\left\{ \sum_{\nu=0}^{N_{Sym}-1} \nu \cdot y_{\nu,comp} \right\}}{\mathrm{Re}\left\{ \sum_{\nu=0}^{N_{Sym}-1} \nu^2 \cdot y_{\nu,comp} \right\}}$$

where

$N_{Sym}$ denotes the length of the input-signal sequence ($x_\nu = x'_{\nu,win}$ ; $x_\nu = x_{\kappa,mean}$) of the maximum-likelihood estimation.

**14.** Method according to claim 13,
**characterised in that**
the calculation of the fine estimated-frequency value ($\Delta\hat{f}_{fine}$) is repeated in an iterative manner.

**15.** Method according to claim 14,
**characterised in that**
fine-estimation iterative contributions are generated in successive iterative stages according to:

$$\Delta\hat{f}_{fine}^{\{it\}} = \frac{1}{2\pi \cdot T_a} \cdot \frac{\text{Im}\left\{ \sum_{v=0}^{N_{Sym}-1} v \cdot y_{v,comp}^{\{it\}} \right\}}{\text{Re}\left\{ \sum_{v=0}^{N_{Sym}-1} v^2 \cdot y_{v,comp}^{\{it\}} \right\}}$$

where it denotes the iteration index of the $it^{th}$ iterative stage,
that the fine-estimation iterative contributions of the already-implemented iterative stages are added according to:

$$\Delta\hat{f}_{fine\_total} = \sum_{\alpha=1}^{it} \Delta\hat{f}_{fine}^{\{it\}}$$

and that the inversely-transformed, compensated signal sequence $y_{v,comp}$ is additionally compensated according to:

$$y_{v,comp}^{\{it\}} = y_{v,comp} \cdot e^{-j\cdot 2\pi\cdot\Delta\hat{f}_{fine\_total}\cdot v\cdot T_a}$$

in order to generate a compensated iterative signal sequence $y_{v,comp}^{\{it\}}$ , and the next iterative stage is implemented with the compensated iterative signal sequence.

**16.** Method according to any one of claim 13 to 15,
**characterised in that**
the fine estimated-frequency value ($\Delta\hat{f}_{fine}$) and the coarse estimated-frequency value ($\Delta\hat{f}_{coarse}$) are added in order to generate a total estimated value ($\Delta\hat{f} = \Delta\hat{f}_{pre}$ ; $\Delta\hat{f} = \Delta\hat{f}_{main}$) of the maximum-likelihood estimation (21a, 21b).

**17.** Device (49) for estimating the frequency ($\Delta f$) and/or the phase ($\Phi'$) of a digital input-signal sequence ($x'_v$) with the total length $\mathbf{N'_{Sym}}$, in particular, with the procedural stages of the method according to any one of claims 1 to 16, comprising

- a frequency pre-estimator (53) for the determination of a pre-estimated frequency value ($\Delta\hat{f}_{pre}$) with a first maximum-likelihood estimator (21a) using a window of the partial length $\mathbf{N_{sym1}}$ from the digital input-signal sequence ($x'_v$), wherein the partial length $\mathbf{N_{sym1}}$ is shorter than the total length $\mathbf{N'_{Sym}}$, wherein the frequency pre-estimator (53) provides a frequency compensator (56, 57) for the frequency compensation of the digital input-signal sequence ($x'_v$) with the pre-estimated frequency value ($\Delta\hat{f}_{pre}$) in order to generate a frequency-compensated signal sequence ($x_{v,comp}$) ;
- a main frequency estimator (58) for the determination of the main estimated-frequency value ($\Delta\hat{f}_{main}$) with a second maximum-likelihood estimator (21b) using the frequency-compensated signal sequence ($x_{v,comp}$); and
- an adder (61) for the addition of the pre-estimated frequency value ($\Delta\hat{f}_{pre}$) and the main estimated-frequency value ($\Delta\hat{f}_{main}$) to form a total estimated-frequency value ($\Delta\hat{f}$).

**18.** Digital storage medium with electronically-readable control signals, which can cooperate in such a manner with a programmable computer or digital signal processor that the method according to any one of claims 1 to 16 is executed.

19. Computer software with program-code means for the implementation of all of the stages according to any one of claims 1 to 16, when the software is stored on a machine-readable data medium.

**Revendications**

1. Procédé permettant d'estimer la fréquence $(\Delta f')$ et/ou la phase $(\Phi')$ d'une séquence de signaux d'entrée numériques avec la longueur totale $N'_{Sym}$ à l'aide des étapes de procédé suivantes consistant à :

    - exécuter une estimation au préalable de la fréquence (53) pour déterminer une valeur estimée au préalable de la fréquence $(\Delta \hat{f}_{pre})$ avec une estimation selon le maximum de vraisemblance (21a) en utilisant une découpe $(x'_{\nu,win})$ de la longueur partielle $N_{sym1}$ extraite de la séquence de signaux numériques d'entrée $(x'_{\nu})$, la longueur partielle $N_{sym1}$ étant plus petite que la longueur totale $N'_{Sym}$,
    - exécuter une compensation de la fréquence de la séquence de signaux d'entrée numériques $(x'_{\nu})$ avec la valeur estimée au préalable de la fréquence $(\Delta \hat{f}_{pre})$ de manière à générer une séquence de signaux à compensation de fréquence, $(x_{\nu,comp})$
    - exécuter une estimation de fréquence principale (58) pour déterminer une valeur estimée principale de la fréquence $(\Delta \hat{f}_{main})$ avec une seconde estimation selon le maximum de vraisemblance (21b) en utilisant la séquence de signaux à compensation de fréquence $(x_{\nu,comp})$ et
    - ajouter la valeur estimée au préalable de la fréquence $(\Delta \hat{f}_{pre})$ et la valeur estimée principale de la fréquence $(\Delta \hat{f}_{main})$ pour une valeur estimée globale $(\Delta \hat{f}')$ de la fréquence.

2. Procédé selon la revendication 1,
**caractérisé**
**en ce que** la compensation de fréquence est effectuée suivant la formule

$$x_{\nu,comp} = x'_{\nu} \cdot e^{-j \cdot 2 \cdot \pi \cdot \Delta \hat{f}_{pre} \cdot \nu \cdot T_o}$$

dans laquelle on signifie par

    $x'_{\nu}$ la séquence de signaux d'entrée,
    $x_{\nu,comp}$ la séquence de signaux à compensation de la fréquence,
    $\Delta \hat{f}_{pre}$ la valeur estimée au préalable de la fréquence
    $T_o$ la période d'échantillonnage de la séquence de signaux d'entrée d'entrée $x'_{\nu}$ et
    $\nu$ l'index de symbole des séquences de signaux

3. Procédé selon la revendication 2,
**caractérisé**
**en ce que** sur la base de la valeur estimée globale $\Delta \hat{f}'$ de la fréquence, on calcule une valeur estimée de la phase suivant la formule

$$\hat{\phi}' = \arg\{ \sum_{\nu=0}^{N_{Sym}-1} x'_{\nu} \cdot e^{-j \cdot \Delta \hat{\omega} \cdot \nu \cdot T_o} \}$$

dans laquelle on signifie par

    $\Delta \hat{\omega}$ l'opération $2\pi$ de la valeur estimée globale $\Delta \hat{f}'$ **de** la fréquence.

4. Procédé selon l'une quelconque des revendications 1 à 3,
**caractérisé**
**en ce qu'**avant la seconde estimation selon le maximum de vraisemblance (21b), on effectue un calcul de moyenne en utilisant des valeurs échantillonnées $N_{mean}$ de la séquence de signaux à compensation de fréquence $(x_{\nu,comp})$

suivie d'un sous-échantillonnage avec un facteur de sous-échantillonnage $\kappa \cdot \textbf{\textit{N}}_{\textbf{\textit{mean}}}$, qui est égal à ou un multiple de $\textbf{\textit{N}}_{\textbf{\textit{mean}}}$.

5. Procédé selon l'une quelconque des revendications 1 à 4,
   **caractérisé**
   **en ce que** le calcul de valeur estimée principale de la fréquence ($\Delta \hat{f}_{\textbf{\textit{main}}}$) est répété de façon itérative.

6. Procédé selon la revendication 5,
   **caractérisé**
   **en ce qu'**au cours des étapes successives de l'itération, des quantités d'itération de la valeur estimée principale

   $\Delta \hat{f}_{main}^{(it)}$ sont générées,

   **en ce que** les quantités d'itération de la valeur estimée principale $\Delta \hat{f}_{main}^{(it)}$ des étapes d'itération déjà exécutées sont cumulées suivant la formule :

   $$\Delta \hat{f}_{main\_total} = \sum_{a=1}^{it} \Delta \hat{f}_{main}^{(a)}$$

   dans laquelle on signifie par it l'index d'itération de l'étape d'itération it-nième, et
   et **en ce qu'**en supplément la séquence de signaux à compensation de fréquence $\textbf{\textit{x}}_{\nu,\textbf{\textit{comp}}}$ est compensée suivant la formule

   $$x_{\nu,comp}^{(it+1)} = x_{\nu,comp} \cdot e^{-j \cdot 2\pi \cdot \Delta \hat{f}_{main\_total} \cdot \nu \cdot T_a}$$

   de manière à générer une séquence de signaux d'itération à compensation de fréquence $x_{\nu,comp}^{(it+1)}$, et la prochaine

   étape d'itération est exécutée avec la séquence de signaux d'itération à compensation de fréquence $x_{\nu,comp}^{(it+1)}$.

7. Procédé selon l'une quelconque des revendications 1 à 6,
   **caractérisé**
   **en ce que**, dans le cadre des deux estimations selon le maximum de vraisemblance (21a, 21b), on exécute une estimation grossière de la fréquence (22) en utilisant une transformée de Fourier discrète suivie par une estimation fine de la fréquence (23) par interpolation.

8. Procédé selon la revendication 7,
   **caractérisé**
   **en ce que**, dans le cadre de l'estimation grossière de la fréquence (22) pour générer une valeur estimée grossière ($\Delta \hat{f}_{\textbf{\textit{coarse}}}$) de la fréquence, on effectue une transformée de Fourier discrète (25) de la séquence de signaux d'entrée ($\textbf{\textit{x}}_{\nu} = \textbf{\textit{x}}'_{\nu,\textbf{\textit{min}}}$ ; $\textbf{\textit{x}}_{\nu} = \textbf{\textit{x}}_{\kappa,\textbf{\textit{mean}}}$) destinée à l'estimation selon le maximum de vraisemblance (21a ; 21b) pour générer une série de Fourier ($\textbf{\textit{X}}_{\mu}$), une formation d'une quantité (26) de la série de Fourier ($\textbf{\textit{X}}_{\mu}$) et une définition du maximum de la quantité ($|\textbf{\textit{X}}_{\mu}|$) ou d'une fonction ($|\textbf{\textit{X}}_{\mu}|^2$) de la quantité de la série de Fourier.

9. Procédé selon la revendication 8,
   **caractérisé**
   **en ce que** la valeur estimée grossière $\Delta \hat{f}_{\textbf{\textit{coarse}}}$ de la fréquence est calculée à partir du maximum de la quantité ($|\textbf{\textit{X}}_{\mu}|$) ou d'une fonction ($|\textbf{\textit{X}}_{\mu}|^2$) de la quantité de la série de Fourier suivant la formule :

$$\hat{\Delta f}_{coarse} = \begin{cases} \mu_{max} \cdot f_Q & \text{für } \mu_{max} \leq N_{FFT}/2 \\ (\mu_{max} - N_{FFT}) \cdot f_Q & \text{für } \mu_{max} > N_{FFT}/2 \end{cases}$$

où l'on signifie par

$f_Q$ la quantification de la transformée de Fourier discrète dans la gamme de fréquence,
$N_{FFT}$ la longueur de la série de Fourier ($X_\mu$) et
$\mu_{max}$ l'index de la valeur discrète de la série de Fourier, où le maximum de la quantité ($|X_\mu|$) ou de la fonction ($|X_\mu|^2$) de la quantité de la série de Fourier est présent.

**10.** Procédé selon la revendication 8 ou 9,
**caractérisé**
**en ce qu'**on décale la série de Fourier ($X_\mu$), la quantité ($|X_\mu|$) ou une fonction ($|X_\mu|^2$) de la quantité de la série de Fourier, en fonction de l'index ($\mu_{max}$) où le maximum de la quantité ($|X_\mu|$) ou de la fonction ($|X_\mu|^2$) de la quantité de la série de Fourier ($X_\mu$) est présent, et qu'alors afin de générer une séquence de signaux de transformée inverse ($y_\nu$) on exécute une transformée de Fourier discrète inverse (29) et la séquence de signaux de transformée inverse ($y_\nu$) est compensée avec la valeur estimée grossière ($\Delta f_{coarse}$) de manière à générer une séquence de signaux de transformée inverse, compensée ($y_{\nu,comp}$).

**11.** Procédé selon la revendication 10,
**caractérisé**
**en ce que** la compensation de fréquence est effectuée suivant la formule :

$$y_{\nu,comp} = y_\nu \cdot e^{-j \cdot 2\pi \cdot \hat{\Delta f}_{coarse} \cdot \nu \cdot T_a}$$

dans laquelle on signifie par

$y_\nu$ la séquence de signaux de transformée inverse,
$y_{\nu,comp}$ la séquence de signaux de transformée inverse, compensée,
$\Delta f_{coarse}$ la valeur estimée grossière de la fréquence,
$T_a$ la période d'échantillonnage de la séquence de signaux d'entrée numériques ($x_\nu = x'_{\nu,win}$ ; $x_\nu = x_{\kappa,mean}$), et
$\nu$ l'index de symbole de la séquence de signaux de transformée inverse

**12.** Procédé selon la revendication 11,
**caractérisé,**
**en ce qu'**afin d'augmenter la résolution de la fréquence en aval de la transformée de Fourier discrète inverse (29), le calcul d'une fonction de vraisemblance Log ($L_4$) est effectué à la tolérance nulle ($\tilde{\Delta f}_{int} = 0$) de la valeur estimée grossière $\hat{\Delta f}_{coarse}$ de la fréquence tout comme à une tolérance $\tilde{\Delta f}_{int} = \pm 1/(4 \cdot N_{sym} \cdot T_a)$ de la valeur estimée grossière $\hat{\Delta f}_{coarse}$ qui correspond à la moitié de la quantification ($f_Q$) de la transformée de Fourier discrète, et
**en ce qu'**à la valeur estimée grossière $\hat{\Delta f}_{coarse}$ de la fréquence, il est ajouté une valeur complémentaire ($\tilde{\Delta f}_{int}$), laquelle correspond à la tolérance ($\tilde{\Delta f}_{int}$) de la valeur estimée grossière $\hat{\Delta f}_{coarse}$ de la fréquence, au niveau de laquelle la fonction de vraisemblance Log ($L_4$) a son maximum $\left( \max\left\{ L_4\left( \tilde{\Delta f}_{int} \right) \right\} \right)$.

**13.** Procédé selon la revendication 11 ou 12,
**caractérisé**
**en ce qu'**une valeur estimée fine $\hat{\Delta f}_{fine}$ est calculée suivant la formule :

$$\Delta \hat{f}_{fine} = \frac{1}{2\pi \cdot T_a} \cdot \frac{\mathrm{Im}\left\{\sum_{\nu=0}^{N_{Sym}-1} \nu \cdot y_{\nu,comp}\right\}}{\mathrm{Re}\left\{\sum_{\nu=0}^{N_{Sym}-1} \nu^2 \cdot y_{\nu,comp}\right\}}$$

dans laquelle on signifie par

$N_{Sym}$ la longueur de la séquence de signaux d'entrée ($x_\nu = x'_{\nu,win}$ ; $x_\nu = x_{\kappa,mean}$) de l'estimation selon le maximum de vraisemblance.

14. Procédé selon la revendication 13,
**caractérisé**
**en ce que** le calcul de la valeur estimée fine ($\Delta \hat{f}_{fine}$) de la fréquence est répété de façon itérative.

15. Procédé selon la revendication 14,
**caractérisé**
**en ce qu'**au cours des étapes d'itération successives des quantités d'itération de la valeur estimée fine sont générées suivant la formule suivante :

$$\Delta \hat{f}_{fine}^{\{it\}} = \frac{1}{2\pi \cdot T_a} \cdot \frac{\mathrm{Im}\left\{\sum_{\nu=0}^{N_{Sym}-1} \nu \cdot y_{\nu,comp}^{\{it\}}\right\}}{\mathrm{Re}\left\{\sum_{\nu=0}^{N_{Sym}-1} \nu^2 \cdot y_{\nu,comp}^{\{it\}}\right\}}$$

où l'on signifie par it l'index d'itération de l'it-nième étape d'itération,
**en ce que** les quantités d'itération de la valeur estimée fine des étapes d'itération déjà exécutées sont cumulées suivant la formule :

$$\Delta \hat{f}_{fine\_total} = \sum_{\alpha=1}^{it} \Delta \hat{f}_{fine}^{\{it\}}$$ ,

et
**en ce que** la séquence de signaux compensée, de transformée inverse $y_{\nu,comp}$ est en supplément compensée suivant la formule :

$$y_{\nu,comp}^{\{it\}} = y_{\nu,comp} \cdot e^{-j \cdot 2\pi \cdot \Delta \hat{f}_{fine\_total} \cdot \nu \cdot T_a}$$

de manière à générer une séquence de signaux d'itération compensée $y_{\nu,comp}^{\{it\}}$ et que la prochaine étape d'itération est exécutée avec la séquence de signaux d'itération compensée.

**16.** Procédé selon l'une quelconque des revendications 13 à 15,
**caractérisé**
**en ce que** la valeur estimée fine ($\Delta \hat{f}_{fine}$) de la fréquence et la valeur estimée grossière ($\Delta \hat{f}_{coarse}$) de la fréquence sont ajoutées de manière à générer une valeur estimée globale ($\Delta \hat{f} = \Delta \hat{f}_{pre}$ ; $\Delta \hat{f} = \Delta \hat{f}_{main}$) de l'estimation selon le maximum de vraisemblance (21 a, 21 b).

**17.** Dispositif (49) permettant d'estimer la fréquence ($\Delta f'$) et/ou la phase ($\Phi'$) d'une séquence de signaux d'entrée numériques ($x'_\nu$) avec la longueur totale $N'_{Sym}$, en particulier avec les étapes de procédé selon l'une quelconque des revendications 1 à 16, avec

- un moyen d'estimation au de la fréquence (53) pour déterminer une valeur estimée au préalable de la fréquence ($\Delta f_{pre}$) avec un premier moyen d'estimation selon le maximum de vraisemblance (21a) en utilisant une découpe de la longueur partielle $N_{sym1}$ extraite de la séquence de signaux d'entrée numériques ($x'_\nu$), la longueur partielle $N_{sym1}$ étant plus petite que la longueur totale $N'_{Sym}$, le moyen d'estimation au préalable de la fréquence (53) comportant un compensateur de fréquence (56, 57) pour la compensation de fréquence de la séquence de signaux d'entrée numériques ($x'_\nu$) avec la valeur estimée au préalable de la fréquence ($\Delta f_{pre}$) de manière à générer une séquence de signaux à compensation de fréquence ($x_{\nu,comp}$),
- un moyen d'estimation principal de la fréquence (58) pour déterminer une valeur estimée principale de la fréquence ($\Delta f_{main}$) avec un second moyen d'estimation selon le maximum de vraisemblance (21b) en utilisant la séquence de signaux à compensation de fréquence ($x_{\nu,comp}$), et
- un moyen additionneur (61) pour ajouter la valeur estimée au préalable de la fréquence ($\Delta \hat{f}_{pre}$) et la valeur estimée principale de la fréquence ($\Delta f_{main}$) pour produire une valeur estimée globale ($\Delta f'$) de la fréquence.

**18.** Support de stockage numérique avec des signaux de commande pouvant être lues de façon électronique qui peuvent coopérer avec un ordinateur pouvant être programmé ou un processeur de signaux numériques, de telle sorte que le procédé selon l'une quelconque des revendications 1 à 16 est exécuté.

**19.** Produit programme d'ordinateur avec des moyens de code de programme, pour pouvoir faire exécuter toutes les étapes selon l'une quelconque des revendications 1 à 16, lorsque le programme est stocké sur un support de données pouvant être lu par une machine.

# Fig. 1

# Fig. 2

# Fig. 3

$$e^{j\,(2\pi\cdot\Delta f\cdot v\cdot T_S + \Phi)}$$

$g$

$n_v$

$a_v \longrightarrow \otimes \longrightarrow \otimes \xrightarrow{\;s_v\;} \oplus \longrightarrow r_v$

14          15          16

# Fig. 4

reell

$\beta$

$\alpha$

$\beta = a+2 \quad v=-2$

$\beta = a+1 \quad v=-1$

$\beta = a \quad v=0$

$\beta = a-1 \quad v=1$

$\beta = a-2 \quad v=2$

$v \qquad \gamma$

Elemente einer
diagonalen Linie
besitzen gleichen
Drehzeiger $\quad e^{-j\cdots}$

Elemente paarweise
konjugiert komplex

Fig. 5

Frequenz-Feinschätzung mit nof_it Iterationen  — 23

$\Delta \hat{f}_{fine}$

$\Delta \hat{f}$

$\hat{\Phi}$ — 24 — Phasenschätzung

$\hat{g}$ — 39 — Verstärkungsschätzung

38  45

Erhöhung der Frequenzauflösung — 40

$e^{-j\cdot 2\cdot \pi \Delta \hat{f}_{int}\cdot \nu \cdot T_a}$ (aus Tabelle) — 46

47

$y_{\nu,comp}$

$\Delta \hat{f}_{int}$

$\Delta \hat{f}_{int} = \arg\{\max(L_4(\Delta \tilde{f}_{int}))\}$ — 44

$L_4\left(\Delta \tilde{f}_{int} = +\dfrac{1}{4\cdot N_{Sym}\cdot T_a}\right)$ — 42

$L_4(\Delta \tilde{f}_{int} = 0)$ — 41

$L_4\left(\Delta \tilde{f}_{int} = -\dfrac{1}{4\cdot N_{Sym}\cdot T_a}\right)$ — 43

Frequenz-Grobschätzung mittels FFT — 21, 22

$IFFT\{Y_{\mu+\mu_{max}}\}$ der Länge $N_{FFT}=2\cdot N_{Sym}$ — 29

$|X_\mu|^2$ — 26

$Y_\mu$

Maximumsuche $\mu_{max} = \arg\{\max(Y_\mu)\}$ — 27

$\mu_{max}$

Umrechnung $\mu_{max} \rightarrow \Delta \hat{f}_{coarse}$ — 28

$\Delta \hat{f}_{coarse}$

$FFT\{x_\nu\}$ der Länge $N_{FFT}=2\cdot N_{Sym}$ — 25

$X_\mu$

$x_\nu$

Fig. 6

Fig. 7

**Fig. 8**

Frequenz-Hauptschätzung

58

49

Frequenz-Vorschätzung

Mittelung über $N_{mean}$ Samples

Unter-abtastung

21b

$\Delta\widehat{f} = \Delta\widehat{f}_{main}$

53

$x_{v,comp}$

$h(v)$

$\frac{1}{N_{mean}}$

$K \cdot N_{mean}$

$x_{K,mean} = x_v$

Universeller ML-Schätzer für Frequenz und Phase

$(\widehat{\Phi}_{main})$

50

$a^*_v$

52

$x'_v$

$r_v$

57

0   $N_{mean}$-1   $v$

60

54

56

59

window($v$)

$e^{-j \cdot 2 \cdot \pi \Delta\widehat{f}_{pre} \cdot v \cdot T_a}$

1

0   $N_{Sym}$-1   $v$

window($v$)

1

0   $N'_{Sym}$-1   $v$

51

21a

61

55

$x'_{v,win} = x_v$

$\Delta\widehat{f} = \Delta\widehat{f}_{pre}$

$\Delta\widehat{f}'$

Universeller ML-Schätzer für Frequenz und Phase

$(\widehat{\Phi}_{pre})$

Phasenschätzung

62

$\widehat{\Phi}' = \arg\left\{ \displaystyle\sum_{v=0}^{N_{Sym}-1} x_v \cdot e^{-j \cdot 2 \cdot \pi \Delta\widehat{f}' \cdot v \cdot T_a} \right\}$

$\widehat{\Phi}'$

EP 1 505 786 B1

43

# Fig. 9

Frequenz-Hauptschätzung in *nof_it_main* Iterationen

$it = it + 1$  73

$e^{-j \cdot 2 \cdot \pi \Delta \hat{f}_{main\_total} \cdot v \cdot T_a}$  74

58

$a^*_v$  52

Frequenz-Vorschätzung  53

$x_{v,comp}$

70  $it=1$  $\Delta \hat{f}_{main\_total}=0$

$x^{\{it\}}_{v,comp}$  75

Mittelung über $N_{mean}$ Samples

Unter-abtastung

$h(v)$  $\frac{1}{N_{mean}}$  $0 \quad N_{mean}-1 \quad v$

$K \cdot N_{mean}$  60

$x^{\{it\}}_{K,mean} = x_v$

21b  Universeller ML-Schätzer für Frequenz und Phase

50

$r_v$  $x'_v$

54  window($v$)  1  $0 \quad N_{Sym}-1 \quad v$

56  $e^{-j \cdot 2 \cdot \pi \Delta \hat{f}_{pre} \cdot v \cdot T_a}$

57

59

$\Delta \hat{f} = \Delta \hat{f}^{\{it\}}_{main}$

window($v$)  1  $0 \quad N'_{Sym}-1 \quad v$  51

55  $x'_{v,min} = x_v$

21a  Universeller ML-Schätzer für Frequenz und Phase

$\Delta \hat{f} = \Delta \hat{f}_{pre}$

$it==nof\_it\_main?$

$\Delta \hat{f}_{main\_total} = \sum_{\alpha=1}^{it} \Delta \hat{f}^{\{\alpha\}}_{main}$  71

$\Delta \hat{f}_{main\_total}$

nein

72

ja

61  $\Delta \hat{f}'$

62  Phasenschätzung

$\hat{\Phi}' = \arg \left\{ \sum_{v=0}^{N_{Sym}-1} x_v \cdot e^{-j \cdot 2 \cdot \pi \Delta \hat{f}' \cdot v \cdot T_a} \right\}$  $\hat{\Phi}'$

EP 1 505 786 B1

44

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10138963 A1
- DE 10309262
- DE 4319769 C1

**In der Beschreibung aufgeführte Nicht-Patentliteratur**

- **U. LAMBRETTE et al.** OFDM Burst Frequency Synchronisation by Single Carrier Training Data. *IEEE Communications Letters,* Marz 1997, vol. 1 (2
- ML Estimation of Time and Frequency Offset in OFDM Systems. *IEEE Transactions on Signal Processing,* Juli 1997, vol. 45 (7